# EUROPEAN PATENT APPLICATION

(11) **EP 4 032 659 A1**
(43) Date of publication of application: **27.07.2022**
(21) Application number: 21203224.7
(22) Date of filing: 18.10.2021
(51) Int. Cl.: B25D 1/02

(54) **EMERGENCY VEHICLE ESCAPE METHOD AND DEVICE THEREFOR**

(30) Priority: 25.01.2021 JP 2021009936; 11.05.2021 JP 2021080115
(71) Applicant: Yoshida, Hideo, Tokorozawa-shi Saitama 359-1132 (JP)
(72) Inventor: Yoshida, Hideo, Tokorozawa-shi Saitama 359-1132 (JP)
(74) Representative: Schmid, Wolfgang

(57) **Abstract**

Emergency escape method for a vehicle and an emergency escape device therefor, to be capable of escaping from the vehicle reliably and safely when, for example, the vehicle employing a laminated glass is submerged or when, for example, occupants of the vehicle are trapped within the vehicle because of a traffic accident, or the like by selecting various escape methods that can be taken in an emergency and realize a rational escape method.

Emergency escape method for a vehicle having a laminated glass 40 as a vehicle glass: Piecing the laminated glass 40 at a predetermined area, cutting or crashing thereof, and fusing or shaking thereof. After performing one or more of those emergency operations, pushing outward the laminated glass 40 by pressing the same at a position apart from the operating position. Forming an escaping space 48 between the operating position and an attaching part of the laminated glass 40. Occupants can escape through the escaping space 48.

## Description

### TECHNICAL FIELD

This invention relates to an emergency escape method for a vehicle and an emergency escape device therefor, capable of escaping from the vehicle reliably and safely when, for example, the vehicle employing a laminated glass is submerged or when, for example, occupants of the vehicle are trapped within the vehicle because of a traffic accident, or the like by selecting various escape methods that can be taken in an emergency and realize a rational escape method.

### Background Art

Recently, cases are increasing where occupants are trapped in a vehicle which is submerged in water because of the road flooded or the river is overflowed by heavy rain, for example.

In such cases, the occupants of the vehicle need to escape outside from the vehicle by rapidly cutting the seatbelts, releasing physical restrain and crushing the door glass.

The present applicant already developed and proposed several devices as an emergency escape device suitable for satisfying such purposes.

For example, there is a fire extinguishing gas cylinder loaded with carbon dioxide is loaded into a breaking device, in which a seat belt introduction groove is arranged on the side of the breaking device, a seat belt cutter is arranged in the seat belt introduction groove, the seat belt is introduced into the seat belt introduction groove, so that the seat belt can be cut, a hummer member is attached to the bottom of the loaded fire extinguishing gas cylinder, a head part of the hammer member is hit against a door glass to crush it, after escaping from the cabin, the head part of the hammer member is operated to crush the fire extinguishing gas cylinder, and the fire extinguishing gas is injected to the fire source (See Patent Document 1).

There is also another one, in which a retainable cylindrical emergency escape tool is provided at one end thereof with a seat belt introduction groove and a seat belt cutter and at the other end with a hammer, wherein a seat belt inserted in the seat belt introduction groove is cut by a seat belt cutter, and a leading end of the hammer is hit against a door glass to crush it, in order for the occupants to escape from the vehicle (See Patent Document 2).

Recently, an automotive vehicle, which employs a laminated glass as a door glass, is immerging for the purpose of improvement of quietness. This laminated glass comprises two single plate glasses and an interlayer made of synthetic resin, which is adhered therebetween, and, therefore, has thin and tough properties.

When the above-mentioned emergency escape devices are used in an emergency of the vehicle employing such a laminated glass, it gives rise to such a worry that the occupants cannot escape from the vehicle because of the laminated glass which is very difficult to crush.

As one attempt to solve the above-mentioned problem, in a laminated glass for a vehicle in which an interlayer is interposed for connection between a pair of tempered glasses, an impacted area such as a conical or polygonal pyramidal metal or ceramics, which is capable of crushing at least one of them, is provided to at least one impact area, so that the area of the tempered glass, which is to be impacted, on the cabin side is hit with a hammer or the like, so that surface crucks reach the inside in order to allow the crucks to run across the entirety of the tempered glass for crushing.

The striking force by the hammer or the like is transmitted to the hitting area so that the interlayer is compressed in the thickness direction, the sharp area of the impact area is projected from an intermediate film to collide with the surface of the tempered glass, so that crush occurs to the surface of the tempered glass and is allowed to reach the inside of the glass, so that the crucks are allowed to run through the glass to break the inside tempered glass, thereby breaking the pair of tempered glasses simultaneously (See Patent Document 3).

However, the vehicle tempered glass has such inconveniences that an impacted member and an impact area are required to be formed on the interlayer, and those structures and manufactures are complicated, the laminated glass is readily crushed, and the strength of the glass is decreased.

### [Prior Art Document]

### [Patent Document]

[JP Patent Document 1] Official Gazette of JP Patent No. 5148623
[JP Patent Document 2] Official Gazette of JP Patent No.6811122
[JP Patent Document 3] Official Gazette of JP Laid-Open Publication No. 2020-172404

### SUMMARY OF THE INVENTION

### Problem to be Solved by the Invention

ln order to solve the above-mentioned problems, it is, therefore, an object of the present invention to provide an emergency escape method for a vehicle and an emergency escape device therefor, capable of escaping from the vehicle reliably and safely when, for example, the vehicle employing a laminated glass is submerged while retaining the toughness of the glass, or when, for example, occupants of the vehicle are trapped within the vehicle because of a traffic accident, or the like by selecting various escape methods that can be taken in an emergency and realize a rational escape method.

### Means to be Solved by the Invention

The present invention of claim 1 comprises piercing the laminated glass at a predetermined area; cutting or crashing thereof; fusing or shaking thereof; after performing one or more of those emergency operations, pushing outward the laminated glass by pressing the same at a position apart from the operating position, and forming an escaping space between the pushing position and an attaching part of the laminated glass, so that occupants can escape through the escaping space. The problem to be solved by this invention is that when, for example, the vehicle employing a laminated glass is submerged or when, for example, occupants of the vehicle are trapped within the vehicle because of a traffic accident, or the like, the occupants can escape from the vehicle reliably and safely by selecting one of various escape methods that can be taken in an emergency and realize a rational escape method.

In the invention of claim 2, the piercing of the laminated glass is performed by making an impact chip collide with the laminated glass vigorously at multiple places thereof. The problem to be solved by this invention is that safe escaping of the occupants is realized by forming an escaping space.

In the invention of claim 3, the cutting is performed by causing a knife to bite into the laminated glass at multiple places thereof so as to be moved by man power or physical power, or a saw chain is rotated by physical power to move thereof. The problem to be solved by this invention is that safe escaping of the occupants is realized by forming an escaping space rapidly.

In the invention of claim 4, the crushing is achieved by repeatedly striking the laminated glass at multiple places thereof with a blunt instrument. The problem to be solved by this invention is that an escaping space can easily be formed by crushing the laminated glass with a simple tool or utensil in order to realize safe escaping of the occupants

In the invention of claim 5, the bushing is achieved by irradiating a laser or maser beam, or electromagnetic wave to the laminated glass at multiple places thereof. The problem to be solved by this invention is that the laminated class is cut rapidly to quickly form an escaping space and realize safe escape of the occupants rapidly.

In the invention of claim 6, the shaping is achieved by repeatedly applying pressurized fluid or elastic vibration, or irradiating ultrasonic waves to the laminated glass at a predetermined position thereof so that the laminated glass is repeatedly vibrated. The problem to be solved by this invention is that an escaping space is formed by statically dropping out and removing the laminated glass to form an escaping space, so that the occupants can escape smoothly.

In the invention of claim 7, the emergency operating positions of the laminated glass can be selected depending on the physique of the occupants of the vehicle, the riding position, and the cabin conditions. The problem to be solved by this invention is that a lower position, intermediate position or upper position is selected depending the physique of the occupants of the vehicle, the ridding position, and the cabin conditions, so that the emergency operation can be performed in a comfortable posture, and when the strength of the operating position is lowered, the operating position, for example, a lower position, intermediate position or upper position is pressed outward to press the laminated glass outward, so that the escaping space can be formed easily.

In the invention of claim 8, the emergency operating positions of the laminated glass are arranged as closely as possible, and the operation interval is removed with a tool or knife. The problem to be solved by this invention is that the strength of the operating position is lowered, so that the operating position can be formed rapidly.

In the invention of claim 9, after installing the impact tip away from the laminated glass, the tip is moved vigorously and collided therewith. The problem to be solved by this invention is to realize reliable crushing.

In the invention of claim 10, the laminated glass is arranged at a front seat door side where partial restriction therearound can be released. The problem to be solved by this invention is that the pushing-out of the laminated glass and forming of the escaping space can be performed rationally and reasonably after the emergency operation.

The present invention of claim 11 comprises a component part capable of piercing , cutting or crushing and fusing or shaping the laminated glass at a predetermined area; and after performing one or more of those emergency operations, the laminated glass is pushed outward by pressing the same at a position apart from the operating position, and an escaping space formed between the operating position and an attaching part of the laminated glass, so that occupants can escape through the escaping space. The problem to be solved by this invention is that in an emergency when, for example, the vehicle employing a laminated glass is submerged or when, for example, occupants of the vehicle are trapped within the vehicle because of a traffic accident, or the like, the occupants can escape from the vehicle reliably and safely.

In the invention of claim 12, the emergency escape device is provided at the other end with a glass crusher, and the glass crusher is provided with an impact chip which is collided with the laminated glass vigorously at multiple places thereof such that the laminated glass can be pierced. The problem to be solved by this invention is that the laminated glass can be pressed outward easily and reliably, so that the escape space can be formed easily and the occupants can escape reliably.

In the invention of claim 13, a knife is caused to bite into the laminated glass at multiple places and moved by man power or physical power or a saw chain is rotated and moved by physical power, so that the laminated glass can be cut. The problem to be solved by this invention is that the escape space can be formed rapidly and easy escape of the occupants can be realized easily.

In the invention of claim 14, the laminated glass can be struck repeatedly at multiple places thereof by a blunt instrument.

The problem to be solved by this invention is that the laminated glass is crushed using a simple tool or instrument so that the escape space can be formed easily and the occupants can escape easily.

In the invention of claim 15, the laminated glass is irradiated at multiple places thereof with a laser or maser beam, or electromagnetic wave to achieve the fusing. The problem to be solved by this invention is that the laminated glass can be cut rapidly and the escape space can be formed rapidly so that the occupants can escape reliably.

In the invention of claim 16, a pressurized fluid or elastic vibration can be repeatedly applied to a predetermined area of the laminated glass, or an ultrasonic wave is applied thereto so that the laminated glass is repeatedly vibrated so as to be shaped. The problem to be solved by this invention is that the laminated glass can be statically dropped and removed so that the glass can be pressed outward easily and an escape space is formed so that the occupants can escape therethrough.

The invention of claim 17, further comprises an impact chip capable of colliding with the laminated glass, the impact chip being moved at a high speed by elasticity of a spring. The problem to be solved by this invention is that the laminated glass can be crushed reliably.

In the claim 18, a square shank receiving therein a chip holder which is provided with a first spring and an impact tip, and a spring box receiving therein a second spring are slidably received inside the emergency escape device. The problem to be solved by this invention is that the impact chip is moved at a high speed by elasticity of the first and second springs so that the laminated glass can be crushed reliably.

In the claim 19, the chip holder and spring box can move proximate to each other. The problem to be solved by this invention is that elasticity of the first and second springs received therein can be solved reasonably with a simple structure.

In the claim 20, elasticity of the first and second springs can be accumulated when the chip holder and spring holder move proximate to each other. The problem to be solved by this invention is that a reasonable structure thereof is realized, so that the impact chip can be moved at a high speed.

In the claim 21, the square shank is formed with a pin engaging groove having a generally L-shape, the spring box is formed with a pin switching groove having a generally parallelogram shape, these grooves are arranged so as to be partially overlapped, the guide pin is inserted into the overlapped part, and the guide pin is normally be arranged for engagement at a bent part of the pin engaging groove. The problem to be solved by this invention is that the square shank can be engaged with the spring box reasonably.

In the claim 22, when the square shank and spring box move proximate to each other, the guide pin can move together therewith, and during constant movement of the square shank and spring box, the guide pin can move to the bent part of the pin engaging groove, so that the guide pin can move from the bent part of the pin engaging groove. The problem to be solved by this invention is that the chip holder can be moved at a high speed by accumulated elasticity of the first and second springs.

In the claim 23, when the guide pin moves from the bent part of the pin engaging groove, the chip holder can be moved to a leading end of the square shank due to the accumulated elasticity of the first and second springs, so that the leading end of the chip holder can be projected from a leading end of the square shank. The problem to be solved by this invention is that the laminated glass can be crushed reliably.

In the claim 24, a grass pressing plate at the leading end of the square shank is provided with an opening such that the opening can be closed normally through a protective sheet made of rubber. The problem to be solved by this invention is that small crushed pieces generated by crushing of the laminated glass is prevented from entering the opening to prevent internal malfunctions, so that the leading end of the chip holder is projected reliably and the laminated glass can be crushed reliably.

In the claim 25, the square shank is provided at a rear end facing position thereof with an engaging projection, and a lever is engagably and rotatably arranged on the engaging projection, such that the square shank and spring box can move proximate to each other through the rotating operation of the lever. The problem to be solved by this invention is that the square shank and spring box can be moved easily by lever operation, so that the burden of the operation labor can be reduced.

In the claim 26, the lever is spacedly formed at one end thereof with a pair of axis holes, such that the axis holes can be gradually engaged with two axis pins arranged at an intermediate part of the escape device body, and distances between the axis pins and the engaging projection are different from each other, so that the turning radius of the lever can be increased gradually. The problem to be solved by this invention is that the crushing operation by the lever is performed reliably, so that the upward movement of the guide pin is enhanced.

In the claim 27, after projection of the impact chip, the lever is released from retention, the lever is then moved to an original position through elasticity of the first and second springs, and the impact tip can be returned to its original position, so that those can be reset. The problem to be solved by this invention is that the piercing operation can be performed repeatedly and rapidly.

In the claim 28, the glass pressing plate is provided therearound with a lighting cylinder. The problem to be solved by this invention is that the crushing operation of the laminated glass can be performed at night reliably and easily.

In the claim 29, the glass crusher is provided with a crushing bit which can be rotated by fluid power or motive power, the crushing bit is provided with a plurality of spiral blades, or the crushing bit is formed in a pyramidal shape, so that the laminated glass can be pierced or crushed. The problem to be solved by this invention is that the crushing power is increased and the crushing bit is formed in a pyramidal shape and the glass particles and powders are dispersed and eliminated, so that the laminated glass can be crushed smoothly and efficiently.

In the claim 30, the glass crusher is provided at a leading end thereof with a plurality of tapered surfaces, with a threaded shaft at a basal part of the leading end, and the threaded shaft can be tightened to a female screw which is provided to an end of the emergency escape device. The problem to be solved by this invention is that the piercing or crushing performance is, when compared with the cylindrical crushing pit, enhanced and the attachment thereof can be performed easily.

In the claim 31, the leading end of the crushing bit can be collided with or strike the laminated glass, so that the laminated glass can be pierced, crushed or broken. The problem to be solved by this invention is that the laminated glass can be pierced, crushed or broken, so that the laminated glass can be pierced or crushed by man power and without driving fluid pressure or electric force.

In the claim 32, the crushing bit is attached to one end of a fire extinguisher mounted on the vehicle, the fire extinguisher can be held with one hand and loaded with a dioxide gas cylinder, and a threaded shaft can be tightened to a female thread of a nut attached to a bottom of the gas cylinder. The problem to be solved by this invention is that the crushing bit can be attached easily.

In the claim 33, the crushing bit is attached to one end of the cylindrical emergency escape device which is mounted on the vehicle and can be held with one hand, and the threaded shaft can be tightened to the female screw provided at one end of the emergency escape device. The problem to be solved by this invention is that the crushing bit can be attached easily.

### [Effect of the Invention]

The present invention of claim 1 comprises piercing the laminated glass at a predetermined area; cutting or crashing thereof; fusing or shaking thereof; after performing one or more of those emergency operations, pushing outward the laminated glass by pressing the same at a position apart from the operating position, and forming an escaping space between the pushing position and an attaching part of the laminated glass, so that occupants can escape through the escaping space. Accordingly, when, for example, the vehicle employing a laminated glass is submerged or when, for example, occupants of the vehicle are trapped within the vehicle because of a traffic accident, or the like, the occupants can escape from the vehicle reliably and safely by selecting various escape methods that can be taken in an emergency and realize a rational escape method.

In the invention of claim 2, the piercing of the laminated glass is performed by making an impact chip collide with the laminated glass vigorously at multiple places thereof. Accordingly, safe escaping of the occupants can be realized by forming an escaping space.

In the invention of claim 3, the cutting is performed by causing a knife to bite into the laminated glass at multiple places thereof so as to be moved by man power or physical power, or a saw chain is rotated by physical power to move thereof. Accordingly, safe escaping of the occupants can be realized by forming an escaping space rapidly.

In the invention of claim 4, the crushing is achieved by repeatedly striking the laminated glass at multiple places thereof with a blunt instrument. Accordingly, an escaping space can easily be formed by crushing the laminated glass with a simple tool or utensil in order to realize safe escaping of the occupants.

In the invention of claim 5, the bushing is achieved by irradiating a laser or maser beam, or electromagnetic wave to the laminated glass at multiple places thereof. Accordingly, the laminated class can be cut rapidly to quickly form an escaping space and realize safe escape of the occupants rapidly.

In the invention of claim 6, the shaping is achieved by repeatedly applying pressurized fluid or elastic vibration, or irradiating ultrasonic waves to the laminated glass at a predetermined position thereof so that the laminated glass is repeatedly vibrated. Accordingly, an escaping space is formed by statically dropping out and removing the laminated glass to form an escaping space, so that the occupants can escape smoothly.

In the invention of claim 7, the emergency operating positions of the laminated glass can be selected depending on the physique of the occupants of the vehicle, the riding position, and the cabin conditions. Accordingly, a lower position, intermediate position or upper position is selected depending the physique of the occupants of the vehicle, the ridding position, and the cabin conditions, so that the emergency operation can be performed in a comfortable posture, and when the strength of the operating position is lowered, the operating position, for example, a lower position, intermediate position or upper position is pressed outward to press the laminated glass outward, so that the escaping space can be formed easily.

In the invention of claim 8, the emergency operating positions of the laminated glass are arranged as closely as possible, and the operation interval is removed with a tool or knife. Accordingly, the strength of the operating position is lowered, so that the operating position can be formed rapidly.

In the invention of claim 9, after installing the impact tip away from the laminated glass, the tip is moved vigorously and collided therewith. Accordingly, reliable crushing can be realized.

In the invention of claim 10, the laminated glass is arranged at a front seat door side where partial restriction therearound can be released. Accordingly, the pushing-out of the laminated glass and forming of the escaping space can be performed rationally and reasonably after the emergency operation.

The present invention of claim 11 comprises a component part capable of piercing , cutting or crushing and fusing or shaping the laminated glass at a predetermined area; and after performing one or more of those emergency operations, the laminated glass is pushed outward by pressing the same at a position apart from the operating position, and an escaping space formed between the operating position and an attaching part of the laminated glass, so that occupants can escape through the escaping space. Accordingly, in an emergency when, for example, the vehicle employing a laminated glass is submerged or when, for example, occupants of the vehicle are trapped within the vehicle because of a traffic accident, or the like, the occupants can escape from the vehicle reliably and safely.

In the invention of claim 12, the emergency escape device is provided at the other end with a glass crusher, and the glass crusher is provided with an impact chip which is collided with the laminated glass vigorously at multiple places thereof such that the laminated glass can be pierced. Accordingly, the laminated glass can be pressed outward easily and reliably, so that the escape space can be formed easily and the occupants can escape reliably.

In the invention of claim 13, a knife is caused to bite into the laminated glass at multiple places and moved by man power or physical power or a saw chain is rotated and moved by physical power, so that the laminated glass can be cut. Accordingly, the escape space can be formed rapidly and easy escape of the occupants can be realized easily.

In the invention of claim 14, the laminated glass can be struck repeatedly at multiple places thereof by a blunt instrument.

Accordingly, the laminated glass is crushed using a simple tool or instrument so that the escape space can be formed easily and the occupants can escape easily.

In the invention of claim 15, the laminated glass is irradiated at multiple places thereof with a laser or maser beam, or electromagnetic wave to achieve the fusing. Accordingly, the laminated glass can be cut rapidly and the escape space can be formed rapidly so that the occupants can escape reliably.

In the invention of claim 16, a pressurized fluid or elastic vibration can be repeatedly applied to a predetermined area of the laminated glass, or an ultrasonic wave is applied thereto so that the laminated glass is repeatedly vibrated so as to be shaped. Accordingly, the laminated glass can be statically dropped and removed so that the glass can be pressed outward easily and an escape space is formed so that the occupants can escape therethrough.

The invention of claim 17, further comprises an impact chip capable of colliding with the laminated glass, the impact chip being moved at a high speed by elasticity of a spring. Accordingly, the laminated glass can be crushed reliably.

In the claim 18, a square shank receiving therein a chip holder which is provided with a first spring and an impact tip, and a spring box receiving therein a second spring are slidably received inside the emergency escape device. Accordingly, the impact chip is moved at a high speed by elasticity of the first and second springs so that the laminated glass can be crushed reliably.

In the claim 19, the chip holder and spring box can move proximate to each other. Accordingly, elasticity of the first and second springs received therein can be solved reasonably with a simple structure.

In the claim 20, elasticity of the first and second springs can be accumulated when the chip holder and spring holder move proximate to each other. Accordingly, a reasonable structure thereof is realized, so that the impact chip can be moved at a high speed.

In the claim 21, the square shank is formed with a pin engaging groove having a generally L-shape, the spring box is formed with a pin switching groove having a generally parallelogram shape, these grooves are arranged so as to be partially overlapped, the guide pin is inserted into the overlapped part, and the guide pin is normally be arranged for engagement at a bent part of the pin engaging groove. Accordingly, the square shank can be engaged with the spring box reasonably.

In the claim 22, when the square shank and spring box move proximate to each other, the guide pin can move together therewith, and during constant movement of the square shank and spring box, the guide pin can move to the bent part of the pin engaging groove, so that the guide pin can move from the bent part of the pin engaging groove. Accordingly, the chip holder can be moved at a high speed by accumulated elasticity of the first and second springs.

In the claim 23, when the guide pin moves from the bent part of the pin engaging groove, the chip holder can be moved to a leading end of the square shank due to the accumulated elasticity of the first and second springs, so that the leading end of the chip holder can be projected from a leading end of the square shank. Accordingly, the laminated glass can be crushed reliably.

In the claim 24, a grass pressing plate at the leading end of the square shank is provided with an opening such that the opening can be closed normally through a protective sheet made of rubber. Accordingly, small crushed pieces generated by crushing of the laminated glass is prevented from entering the opening to prevent internal malfunctions, so that the leading end of the chip holder is projected reliably and the laminated glass can be crushed reliably.

In the claim 25, the square shank is provided at a rear end facing position thereof with an engaging projection, and a lever is engagably and rotatably arranged on the engaging projection, such that the square shank and spring box can move proximate to each other through the rotating operation of the lever. Accordingly, the square shank and spring box can be moved easily by lever operation, so that the burden of the operation labor can be reduced.

In the claim 26, the lever is spacedly formed at one end thereof with a pair of axis holes, such that the axis holes can be gradually engaged with two axis pins arranged at an intermediate part of the escape device body, and distances between the axis pins and the engaging projection are different from each other, so that the turning radius of the lever can be increased gradually.

Accordingly, the crushing operation by the lever is performed reliably, so that the upward movement of the guide pin is enhanced.

In the claim 27, after projection of the impact chip, the lever is released from retention, the lever is then moved to an original position through elasticity of the first and second springs, and the impact tip can be returned to its original position, so that those can be reset. Accordingly, the piercing operation can be performed repeatedly and rapidly.

In the claim 28, the glass pressing plate is provided therearound with a lighting cylinder. Accordingly, the crushing operation of the laminated glass can be performed at night reliably and easily.

In the claim 29, the glass crusher is provided with a crushing bit which can be rotated by fluid power or motive power, the crushing bit is provided with a plurality of spiral blades, or the crushing bit is formed in a pyramidal shape, so that the laminated glass can be pierced or crushed. Accordingly, the crushing power is increased and the crushing bit is formed in a pyramidal shape and the glass particles and powders are dispersed and eliminated, so that the laminated glass can be crushed smoothly and efficiently.

In the claim 30, the glass crusher is provided at a leading end thereof with a plurality of tapered surfaces, with a threaded shaft at a basal part of the leading end, and the threaded shaft can be tightened to a female screw which is provided to an end of the emergency escape device. Accordingly, the piercing or crushing performance is, when compared with the cylindrical crushing pit, enhanced and the attachment thereof can be performed easily.

In the claim 31, the leading end of the crushing bit can be collided with or strike the laminated glass, so that the laminated glass can be pierced, crushed or broken. Accordingly, the laminated glass can be pierced, crushed or broken, so that the laminated glass can be pierced or crushed by man power and without driving fluid pressure or electric force.

In the claim 32, the crushing bit is attached to one end of a fire extinguisher mounted on the vehicle, the fire extinguisher can be held with one hand and loaded with a dioxide gas cylinder, and a threaded shaft can be tightened to a female thread of a nut attached to a bottom of the gas cylinder. Accordingly, the crushing bit can be attached easily.

In the claim 33, the crushing bit is attached to one end of the cylindrical emergency escape device which is mounted on the vehicle and can be held with one hand, and the threaded shaft can be tightened to the female screw provided at one end of the emergency escape device. Accordingly, the crushing bit can be attached easily.

### BRIEF DESCRIPTION OF DRAWINGS

Fig. 1 is a front view showing a first embodiment of the present invention, in which a laminated glass, not yet crushed, is shown.
Fig. 2 is a front view showing a square shank of a glass crusher which is employed in the first embodiment.
Fig. 3 is a front view, showing an exploded state, of the square shank of the glass crusher and a spring box which is also employed in the first embodiment.
Fig. 4 is a left side view of Fig. 3.
Fig. 5 is a left side view of Fig. 3, in which an opening is rotated by 90o.
Fig. 6 is a view showing an impact chip attached to a chip holder employed in the first embodiment.
Fig. 7 is a plan view showing an outer case employed in the first embodiment.
Fig. 8 is a front view showing a lever employed in the first embodiment, in which a positional relationship between an axis hole and an axis pin.
Fig. 9 is a sectional view showing a part of a shank part of the lever which is employed in the first embodiment.
Fig. 10 is a front view showing a part of a front seat door which employed a laminated glass according to the first embodiment.

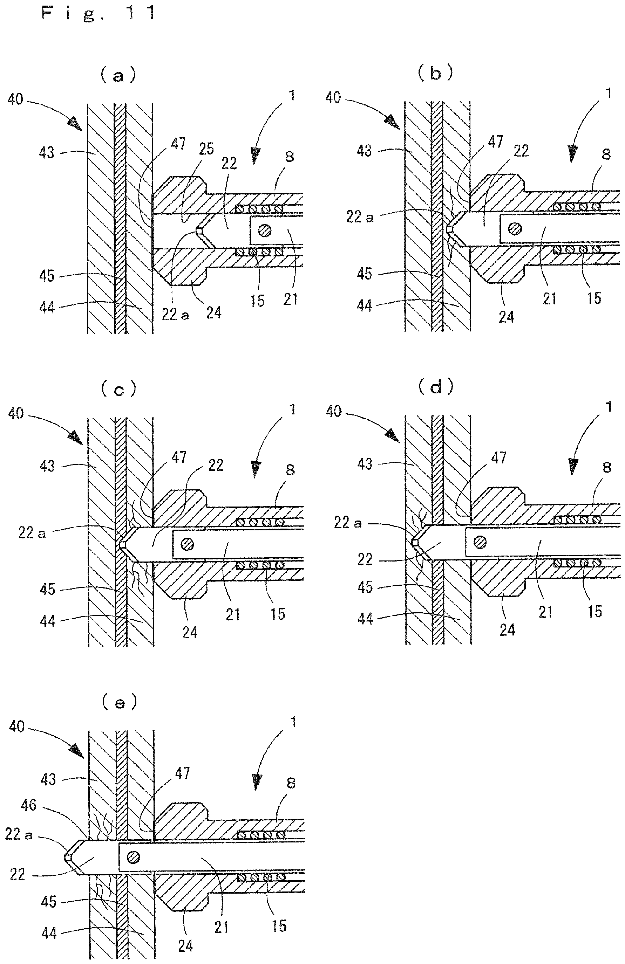

Fig. 11 is a sectional view showing a crashing state of the laminated glass by the glass crusher according to the first embodiment, in which (a) shows a glass pressing plate pressed against the inner surface of the laminated glass immediately before the laminated glass is crushed, (b) shows a status where, of the overall operating status of the glass crusher, the impact chip is collided with an inner tempered glass causing a situation where a crack occurs, (c) shows a status where, of the overall operating status of the glass crusher, the impact chip arrives at the interlayer, (d) shows a status where, of the overall operating status of the glass crusher, the impact chip arrives at the outer tempered glass causing the occurrence of a crack, and (e) shows a status where, of the overall operating status of the glass crusher, the impact chip penetrate through the outer tempered glass.
Fig. 12 shows a status in which after one area of the laminated glass is crushed, it is pushed and displaced outwardly so as to form an escape space.
Fig. 13 is a front view showing a second embodiment of the present invention, showing a status of the laminated glass not yet crushed.
Fig. 14 is a front view of a square shank, which is employed in the second embodiment.
Fig. 15 is a front view of a spring box, which is employed in the second embodiment.
Fig. 16 is a front view showing a status, in which an impact chip attached to a chip holder which is employed in the second embodiment.
Fig. 17 is a front view showing one end of an emergency escape device, which is employed in the second embodiment.
Fig. 18 is a sectional view showing a main part of a third embodiment of the present invention, showing a mounting status of a crushing pit provided with a spiral brake and a status where the crushing pit is not yet collided with the laminated glass and where a disk spring is extended.
Fig. 19 is a sectional view showing a crushing bit entering into the laminated glass according to the third embodiment.
Fig. 20 is a sectional view showing the crushing pit according to the present invention, in which the crushing bit is collided with the laminated glass and an inner disc spring is compressed.
Fig. 21 is an explanatory view showing a laminated glass crushed by a crushing bit having a pyramidal shape, in which glass particles and powder are dispersed and disposed according to a fourth embodiment of the present invention.
Fig. 22 is a front view showing an emergency escape device in which a glass pressing plate is provided therearound with a lighting cylinder according to a fifth embodiment of the present invention.
Fig. 23 is a front view showing a crushing device applied to a fire extinguisher according to a sixth embodiment of the present invention, in which a crushing bit is attached to a bottom of a carbon dioxide gas cylinder mounted on the fire extinguisher.
Fig. 24 is a sectional view showing, in enlarged view, an important part of the sixth embodiment.
Fig. 25 is a perspective view showing, in enlarged scale, the crushing bit according to the sixth embodiment.
Fig. 26 is a front view of the crushing bit according to the six embodiments.
Fig. 27 is a plan view of Fig. 26.
Fig. 28 is a right view of Fig. 26.
Fig. 29 is a bottom view of Fig. 26.
Fig. 30 is a perspective view showing a crushing device according to an eighth embodiment.
Fig. 31 is a vertical sectional view of the crushing device, which is shown upside down, according to the seventh embodiment.
Fig. 32 is a sectional view showing, in enlarged scale, a crushing state status of a laminated glass in the crushing device according to the seventh embodiment, in which a protective cover is bent and a crushing bit is exposed.
Fig. 33 is a front view showing a crushing device which is applied to a fire extinguisher according to an eighth embodiment of the present invention, in which a crushing bit is attached to a bottom of a carbon dioxide gas cylinder.
Fig. 34 is a sectional view showing, in enlarged scale, an important part according to the eighth embodiment.
Fig. 35 is a perspective view showing, in enlarged scale, a crushing bit according to a ninth embodiment of the present invention.
Fig. 36 is a front view of the crushing bit according to the ninth embodiment.
Fig. 37 is a plan view of Fig. 36.
Fig. 38 is a right-side view of Fig. 36.
Fig. 39 is a bottom view of Fig. 36.
Fig. 40 is a perspective view showing a crushing device of an emergency escape device according to the ninth embodiment, in which one end of the crushing device is attached with a crushing pit.
Fig. 41 is a vertical sectional view of Fig. 40, which is shown upside down.
Fig. 42 is a front view showing a crushing device which is applied to a fire extinguisher according to 10 embodiments of the present invention, in which a carbon dioxide gas cylinder mounted on the fire extinguisher is attached at a bottom thereof with a crushing pit.
Fig. 43 is a sectional view showing, in enlarged view, an important part of the tenth embodiment.
Fig. 44 is a perspective view of the crushing pit according to the tenth embodiment.
Fig. 45 is a front view of the crushing bit according to the tenth embodiment.
Fig. 46 is a plan view of Fig. 45.
Fig. 47 is a right view of Fig. 45.
Fig. 48 is a bottom view of Fig. 45.
Fig. 49 is a perspective view showing a crushing device, which is applied to an emergency escape device according to an eleventh embodiment of the present invention, in which one end thereof is attached with a crushing bit.
Fig. 50 is a vertical sectional view of Fig. 49, which is shown upside down.

### BEST MODE FOR CARRYING OUT THE INVENTION

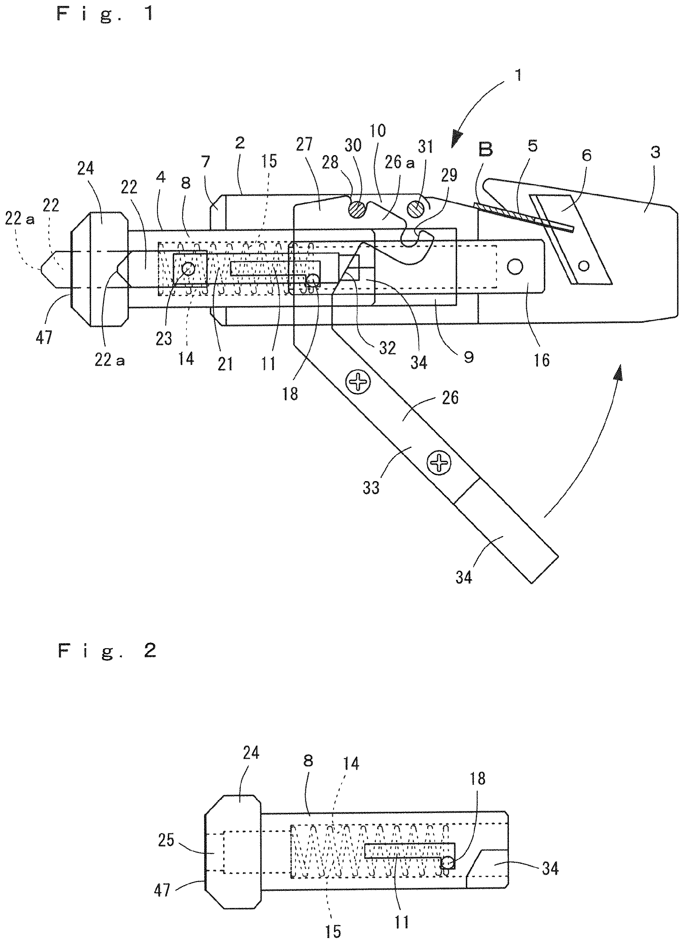

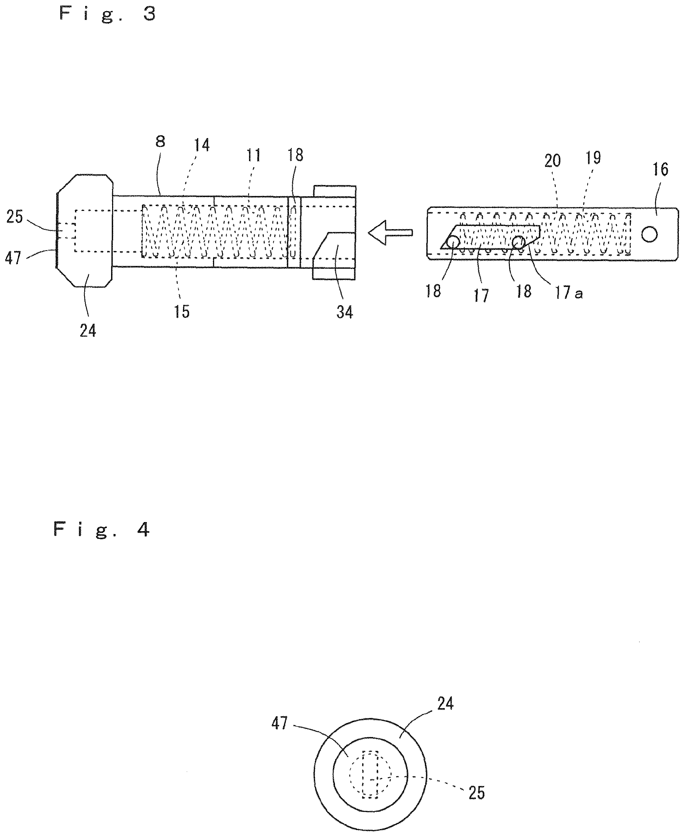

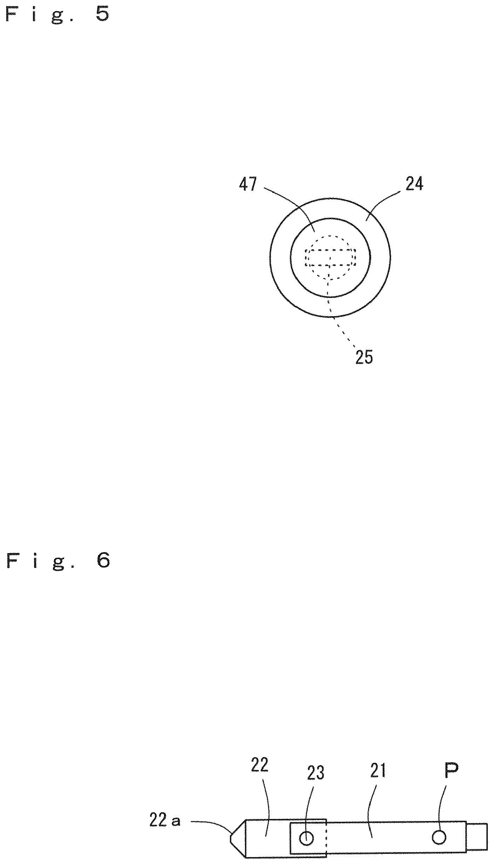

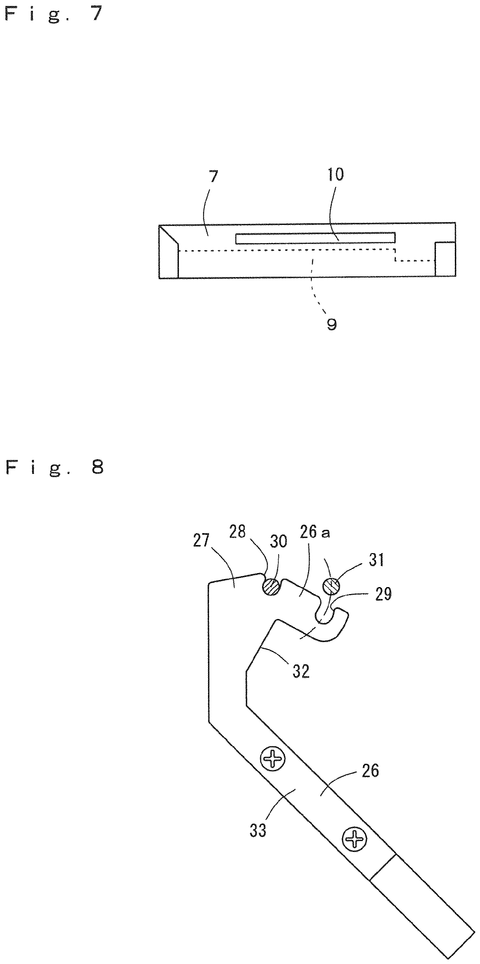

One embodiment of the present invention will now be described hereinafter with reference to a drawing, in which the present invention is applied to an emergency escape device which is disposed at an inner side of a front seat door of a vehicle equipped with a laminated glass. In Figs. 1 through 12, reference numeral 1 denotes an emergency escape device which includes a cylindrical escape device body 2 having a length of about 17 cm and an outer diameter of about 4 cm. The body 2 is provided at one end thereof with a seat belt cutting device 3 and at the other end thereof with a glass crusher 4.

The seat belt cutter 3 is formed in a generally cylindrical shape. The seat belt cutter 3 is attached to the escape device body 2 with its inside hollow part connected to a leading end of the body 2 by a pin. A seat belt introduction groove 5 is open to a basal end side of the seat belt cutter 3. A guide surface of the seat belt introduction groove 5 is formed diagonally and a seat belt cutter 6 is arranged diagonally in its back, so that a seat belt B introduced can be cut.

The escape device body 2 is provided with a pair of outer cases 7, 7 having a generally U-shape in section. The outer cases 7, 7 are connected facing each other and a square shank 8 of the grass crusher 4 is received in a rectangular space inside thereof.

In other words, the outer case 7 is formed with a horizontal rectangular concave groove 9 at its inside and with a horizontal lever receiving groove 10 at is outside.

The square shank 8 is formed in the opposite position of the intermediate part with a generally L-shaped pin engaging groove 11. The pin engaging groove 11 is formed at its peripheral surface and in the opposite position of the leading end of its other side surface with a rectangular opening window, and in the opposite position of the other end of the peripheral surface with a generally trapezoidal shape projecting therefrom.

A stepped shaft 14 is formed inside the square shank 8, a first spring 15 is received in the leading end of the square shank 8, and a terminal part thereof is arranged at the bent part of the pin engaging groove 11.

A spring box 16 is slidably inserted in the rear end of the square hole 14, a pin switching groove 17 is formed in the opposite position of the leading end of the peripheral surface of the box 16, and the switching groove 17 is formed in a horizontal parallelogram, the inner side of which movably receives a guiding pin 18.

A switching edge 17a of a rear end side of the pin switching grove 17 is formed in a gently obliged edge, so that the guiding pin 18, which has moved thereto, moves upward, enabling to displace the guiding pin 18 upward.

The spring box 16 is formed therein with a stepped hole 19, and a second spring 20, which is stronger than the first spring 15, is received in the stepped hole 19 so that the spring 20 can store elasticity caused by pressure due to retreating displacement of the square shank 8.

The guiding pin 18 is inserted in the pin engaging groove 11 and pin switching groove 17 from the outside of the square shank 8. The square shank 8 and spring box 16 are connected to each other through the guiding pin 18, so that the spring box 16 is pushed into the square shank 8 for hooking.

A square chip holder 21 is movably inserted in the first spring 15, and an impact chip 22 having a high hardness plate-shape is fixed, as an impact chip 22a, to the tip of the holder 21 through a pin 23.

The square shank 8 is provided at a leading end thereof with a glass pressing plate 24 having a thick rectangular plate-shape projecting therefrom, and the pressing plate 24 is formed at an end face thereof with an opening 25 having a vertically elongated rectangular shape, so that the impact chip 22 can appear therefrom.

An axis part 27 of the lever 26 is received in each lever receiving groove 10 of the outer case 7 such that the part 27 can move in the forward and backward direction, and two axis holes 28, 29 are spacedly formed on the axis part 27.

The lever 26 is formed in a generally inverted L-shape by pressing a thick steel plate, and the axis part 27 is formed on an upper end thereof in a downwardly bent shape at an acute angle.

The lever receiving groove 10 is provided with two axis pins 30, 31 spacedly arranged therein. The axis holes 28, 29 are arranged on the axis pins 30, 31 such that the axis holes 28, 29 are gradually engaged therewith.

A tapered engaging part 32 is formed on an upper part of the lever 26 such that the part 32 can engage a plate-shaped engagement protrusion projecting from a rear end of the square shank 8. Normally, the axis pin 30 is urged in such a manner as to be engageable with the axis hole 28 by displacement of the square shank 8 which is urged forward by the second spring 20. The lever 26 is provided with a shank 33 extending diagonally downward from the engaging part 32, and a plate-shaped shank holder 34 is pinned between the shanks 33, 33.

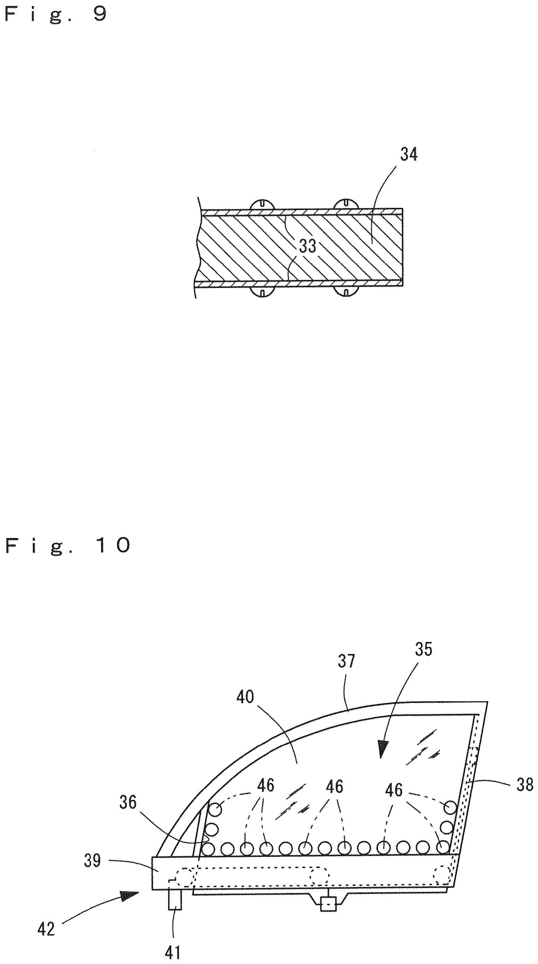

The front seat door 35 is partitioned by sashes 36 through 38 and a belt line frame 39, for example, as shown in Fig. 10, and a laminated glass 40 moves upward and downward therebetween by a lifting device 42 equipped with a motor 41 from a storage section (not shown) directly below.

Thus, the laminated glass 40 is not closely fixed therearound.

The laminated plate 40 is provided with tempered glass plate 43, 44 made of inorganic glass plate placed indoors and outdoors and thermoplastic interlayer film 45 arranged therebetween.

In this embodiment, the thickness of the tempered glass plate 43, 44 is 0.5 mm or more but 2.5 mm or less. If possible, the tempered glass plate 44 placed indoors is preferably thinner than the tempered glass plate placed outdoors from the standpoint of vehicle safety and weight reduction. The thickness of the interlayer film 45 used in this embodiment is 0.5 mm or more but 3 mm or less.

If possible, it is preferable that the thickness of the interlayer film is 0.3 mm or more but 11.5 mm or less in order to reduce the weight and achieve easy handling.

In Figs., reference numeral 46 denotes a plurality of perforation marks or penetration marks formed, by the emergency escape device 1, on a lower part of the laminated glass 40 along a belt line frame 39, and 47 denotes a thin protective sheet made of a rubber plate and adapted to prevent small crushed pieces, that are generated, when the laminated glass 40 is crushed, from entering into the opening 25 of the grass pressing plate 24 in order to prevent internal malfunctions.

Reference numeral 48 denotes a passenger escaping space formed by pressing out the laminated glass 40 after the glass 40 has been crushed to a predetermined extent.

The emergency escape device for a vehicle thus constructed according to the present invention includes a seat belt cutting device 3 arranged at one end of the escape device body 2, and the glass crusher 4 arranged at the other end and requires manufacturing those component parts.

Of them, the seat belt cutter 3 is made of synthetic resin in a generally cylindrical shape, and a hollow part inside is attached to a leading end of the escape device body 2 for pin connection.

The seat belt cutting device 3 according to this embodiment is formed such that it can be split in half along the axial direction around the seat belt introducing groove 5 and those split parts are jointed to form a pin connection for easy production.

A seat belt introduction groove 5 is open to a basal end side of the seat belt cutting device 3. A guide surface of the introduction groove 5 is formed diagonally, and the seat belt cutter 6 is formed diagonally in the inner part thereof, so that the introduced seat belt B can be cut.

The emergency escaping device body 2 includes a square shaft glass crusher 4 made of synthetic resin, a spring box 16 slidably inserted in a rear end of the crusher 4, a set of outer cases 7, 7 which can be attached to an outer side of the crusher 4, and a set of levers 26 which can be attached to the outer cases 7, 7.

Of them, the glass crusher 4 is provided with a thick rectangular plate-shaped glass pressing plate 24 projecting from a leading end thereof, a rectangular opening 25 formed on an end surface thereof, and a square hole 14 formed inside the square shank 8, so that a first spring 15 and a chip holder 21 can be received in the square hole 14.

The chip holder 21 comprises a steel material formed on a square axis, a high hardness plate-shaped impact chip 22 tacked on a leading end thereof and the guiding pin 18 inserted in a pin hole P formed in a rear end thereof, and the chip holder 21 and spring box 16 connected to each other.

The square shank 8 is provided in the opposite position of the middle part thereof with the generally L-shaped pin engaging groove 11 communicating with the square hole 14, and on the rear end thereof with a trapezoidal plate-shaped protrusion 34 protruding therefrom.

The spring box 16 is resin-molded into a square tube, a pin switching groove 17 is formed on a reading end thereof, the pin switching groove 17 is formed in a horizontally elongated parallelogram, and the guide pin 18 is movably received in an inner side thereof.

The pin switching edge 17a arranged on a rear side of the pin switching groove 17 is a gently slanted edge, so that the guide pin 18 can ride on the switching edge 17a immediately before the start of breaking of the laminated glass 40 and move the guide pin 18 upward so as to escape from the bent part to join in the engaging groove 11, so that the guide pin 18 can move along the linear engaging groove 11.

A second spring 20 is received in the spring box 16, and the guide pin 18 is inserted into the pin switching groove 17 in the leading end of the guide pin 18 from outside of the square shank 8 so that the spring box 16 and square shank 8 are connected to each other.

Because of the above-mentioned arrangement, elasticity stored in the second spring 20 is transmitted to the chip holder 21 at a breath, so that the impact chip 22 on the leading end is protruded from the opening 25.

A stepped square hole 14 is formed within the outer case 7. The square shank 8 and a part of the spring box 16 are received in the square hole 14, and the lever receiving groove 10 is formed by penetrating the groove on the outside thereof. The two axis pins 30, 31 are spacedly arranged in the lever receiving groove 10.

The lever 26 is formed in a generally L-shape by pressing a thick steel plate and the axis part 27 is formed on an upper end thereof by bending it downward at an acute angle.

The tapered engaging part 32 is formed on an upper part of the lever 26 so as to be engaged with the engaging protrusion 34 protruding from the rear end of the shank holder 8.

The levers 26, 26 thus obtained are inserted in the lever receiving grooves 10, 10, and the axis holes 28, 28 are engaged with the axis pins 30, 30. Also, the engaging parts 32, 32 are engaged with the engaging protrusions 34, 34 arranged on both sides of the square shank 8, the shanks 33, 33 are projected downward, and the plate-shaped shank holder 34 is screwed between the shanks 33, 33.

In the emergency escape device for a vehicle thus obtained, as shown in Fig. 1, the seat belt cutting device 3 is arranged on one end of the glass crusher 4, the glass crusher 4 is arranged on the other end thereof, and the shank 33 is projected diagonally downward from the outer case 7.

In this case, the pin engaging groove 11 in the middle of the square shank 8 and the position of the pin switching groove 17 of the spring box 16 are partially overlapped, the guide pin 18 is inserted in the bent part of the overlapped pin engaging groove 11 so that the square shank 8 and spring box 16 are pin connected.

At that time, the spring box 16 is slightly moved toward the square shank 8 to tighten the first spring 15 such that its elasticity is acted on the levers 26, 26 through the engaging protrusions 34, 34 and the levers 2, 26 are turned counterclockwise about the engaging protrusions 34, 34, so that the axis hole 28 is pressed on the axis pin 30. This status is as shown in Fig. 1.

When the emergency escape device for a vehicle thus constructed is used, the lever 26 is grasped so as to be turned counterclockwise about the engaging protrusion 34.

When doing so, the square shank 8 moves toward the seat belt cutting device 3 while pushing the first spring 15, and the guide pin 18 moves therewith toward the rear side of the pin switching groove 17.

Also, as the square shank 8 moves, the second spring 20 within the spring box 16 is pushed so that elasticity of the first and second springs 15, 20 accumulates.

Thereafter, when the lever 26 is further turned in the same direction, the axis part 27 of the lever 26 is moved upward, the axis hole 28 is retreated and disengaged from the axis pin 30 and the axis hole 29 is engaged with the axis pin 31 instead.

As a result, the turning radius of the lever 26 about the engaging protrusion 34 is increased so that the operating force of the lever is reduced and becomes easier, and the guide pin 18 is moved to the basal part of the switching edge 17a and starts climbing the edge 17a.

In this way, when the guide pin 18 gradually moves upward along the switching edge 17a, and the bending part of the guide pin 18 is pulled out from there and moves to the straight part, the restraining action of elasticity is released, and the resultant force of those elasticity is acted on the chip holder 21 through the guide pin 18.

For this reason, the chip holder 21 moves toward the leading end side within the square shank 8, the impact chip 22 breaks through the protective sheet 47 and protrudes from the opening 25, so that the tempered glass 44 inside the laminated glass 40 can be crushed.

The emergency escape device 1 thus assembled is simple in structure of each component member and most of the component members are molded with synthetic resin. Therefore, it is lightweight, easy and cheap to manufacture, and the burden of labor is reduced. Moreover, since it is light weighted, the emergency escape device 1 can be stored in a proper position near the front seat in the vehicle.

When the laminated glass 40 equipped in the vicinity of the front seat of the vehicle is crushed using the emergency escape device 1, firstly, the emergency escape device 1 is held to operate the seat belt cutting device 3 so that the seat belt B is inserted in the seat belt introducing groove 4 to cut the side face of the seat belt B to release the physical restrain by the seat belt B.

Secondly, the glass pressing plate 24 equipped on the leading end of the square shank 8 of the glass crusher 4 is pressed against the tempered glass 44 on the inner lower part of the laminated glass 40 to hold. In doing so, the glass pressing plate 24 can be kept in the plate 24 easily at a predetermined position thereof.

Since the emergency escape device 1 is not yet operated, the impact chip 22 is still held in a stationary state and the leading end 22a is positioned spaced apart from the surface of the tempered glass 44. This status is as shown in Fig. 11(a).

In this case, the actual operating position with respect to the laminated glass can be selected properly depending on the physique of the occupants, the riding position and the cabin conditions.

For example, the actual operating position with respect to the laminated glass is selected at a lower position, an intermediate position or an upper position of the laminated glass depending on the physique of the occupants, the riding position and the cabin conditions. Also, by properly taking into consideration such conditions as, for example, the vertically or horizontally inclined condition of the cabin or the scattering conditions of the on-board equipment, the operation can be carried out in a comfortable posture.

Then, when the operation is carried out and the strength of the operating position of the laminated glass is decreased, its separation position, for example, the upper position, lower position or intermediate position of the operating position is pushed outwardly to push out the laminated glass outwardly so that an escaping space 48 can be reasonably formed.

When the emergency escape device 1 is operated during such an emergency operation, the impact chip 22 breaks through the protective sheet 47 and protrudes from the opening 25 so as to be collided with the laminated glass 44.

As a result, crack is formed in the laminated glass 44 and propagated to the area therearound so that the laminated glass 44 is broken. This status is as shown in Fig. 11 (b).

In this case, since the section of the impact chip 22 is vertically rectangular and compact, the impact force and frictional force on the laminated glass 44 are small, and the elasticity of the first and second springs 15, 20 required for this can be reduced.

At that time, small crushed pieces generated, when the laminated glass 40 is crushed, are prevented from entering into the square shank 8 by the protective sheet 47, so that biting into the impact chip 22 and chip holder 21 is prevented and smooth operation is maintained.

Thereafter, when the impact chip 22 moves further inwardly of the laminated glass 40 and arrives at the interlayer film 45, the comparatively flexible interlayer film 45 is immediately crushed. This status is as shown in Fig. 11(c).

After breakage of the interlayer film 45, the impact chip 22 is moved to the outer tempered glass 43, and entered into the glass 43 to form cracks so as to propagate the same to the surroundings and cruck the laminated glass 43.

This status is as shown in Fig. 11 (d).

Thus, when the impact chip 22 is drilled through the glass 40, the piercing mark 46 having a generally same shape as the section of the impact chip 22 is pierced and formed in the laminated glass 40. This status is as shown in Fig. 11 (e).

Thus, after piercing one place of the laminated glass 40, the holding of the lever 26 is released.

By doing so, the lever 26 is returned to the original position by elasticity of the first and second springs 15, 20, the chip holder 21 is pulled back into the square shank 8., and the impact chip 22 is returned to the original position within the square shank 8 so as to be reset into the status of Fig. 1.

Thereafter, the pressing plate 24 of the emergency escape device 1 is moved to another position proximate to the piercing mark 46 to carry out the same piercing operation as mentioned before to form another piercing mark 46. Thereafter, this operation is repeatedly carried out to form a crushing area sufficient for forming an escaping space 48 as later described.

When the crushing area of the laminated glass 40 is increased, the strength of the crushing part is gradually decreased.

Then, when the position of the laminated glass 40 spaced apart from this crushing part is pressed outward from the cabin, the position is easily bent outward by elasticity of the remaining interlayer film 45 caused by this operation.

Thus, the escaping space 48 through which the passengers can escape is formed between this push and bend position and a partition space of the sashes 36 through 38 which are the attaching part of the laminated glass, so that the passengers can escape therethrough.

In this case, since the actual operating position on the laminated glass is selected depending on the physique of the occupants, the riding position and the cabin conditions, operation is performed with a reasonable posture, the strength of the operating position of the laminated glass is decreased, the laminated glass is dropped out of the surrounding attaching part by the impact of the emergency operation, and when the restrain is eased, the separation position, for example, an upper position, a lower position or an interlayer of the operating position is pressed outward to push out the laminated glass to form the escaping space.

In this case, the emergency operation is performed by carrying out multiple tasks in a complex and continuous manner, so that the strength of the operating position is decreased.

According to the emergency escape device 1 of the first embodiment as described above, despite of its small size, light weight and small structure, a strong piercing force or crushing force can be obtained on the impact chip 22 to break the laminated glass 40 by elasticity of the first and second springs 15, 20. Moreover, the breaking operation can be performed easily and rapidly with a simple triggering operation by the lever 23.

Also, according to the above-mentioned emergency escape method, the above-mentioned emergency operation is performed with respect to the front seat door 35 whose surroundings are not yet completely fixed. After the predetermined crushing, the front seat door 35 is pressed from the cabin side so as to be bent outward, so that the escaping space 48 for the occupants is formed. Therefore, smooth escape can be realized reasonably by making good use of the structures of the front seat door 35 and laminated glass 40.

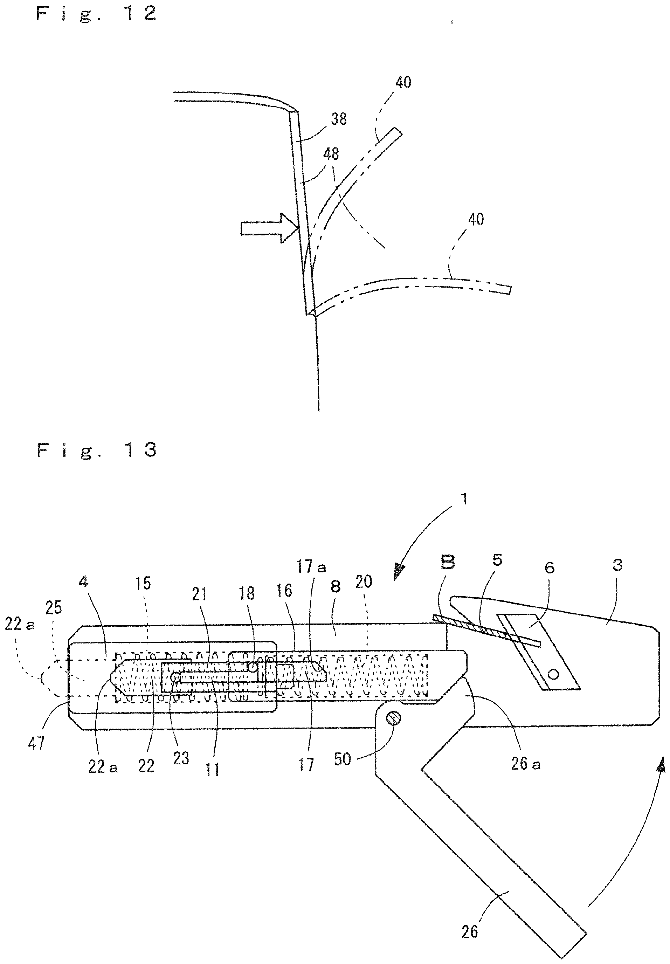

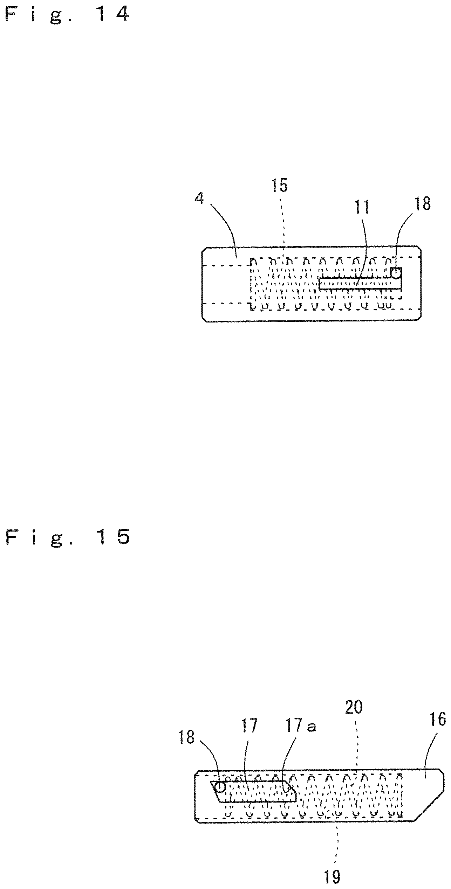

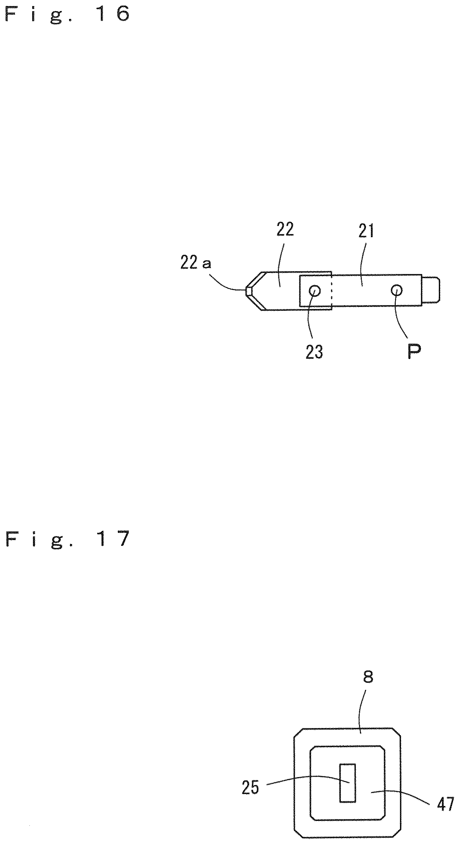

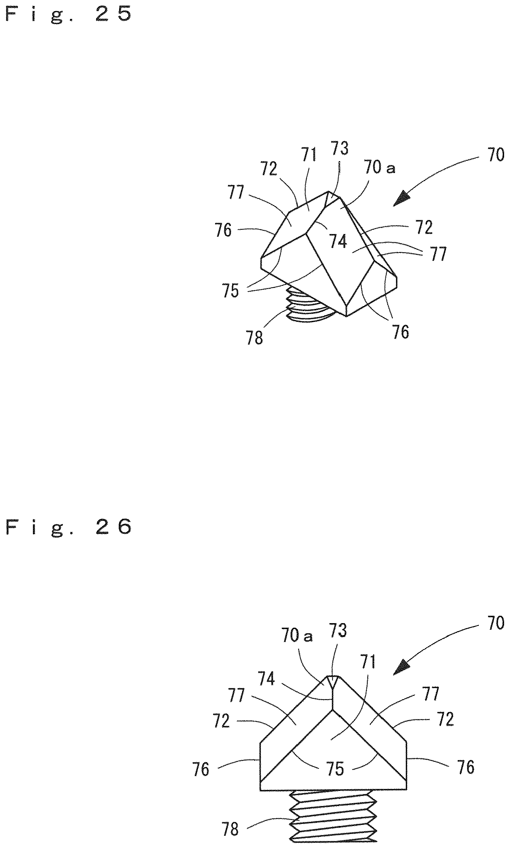

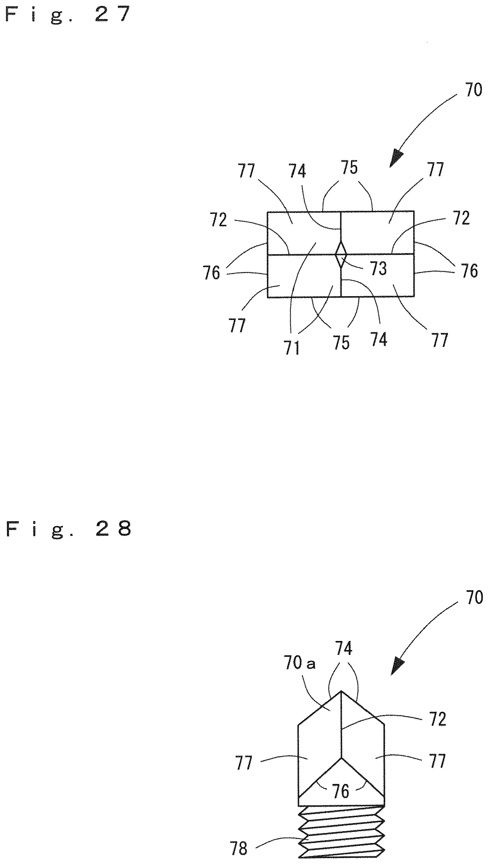

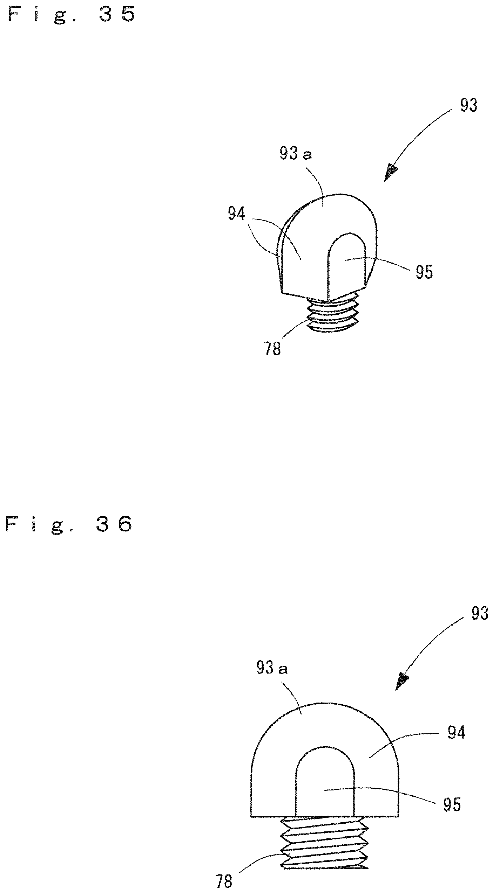

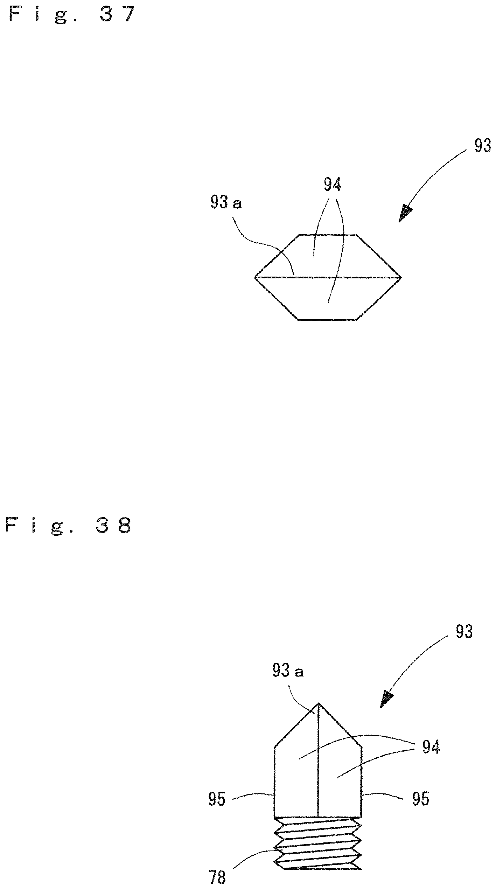

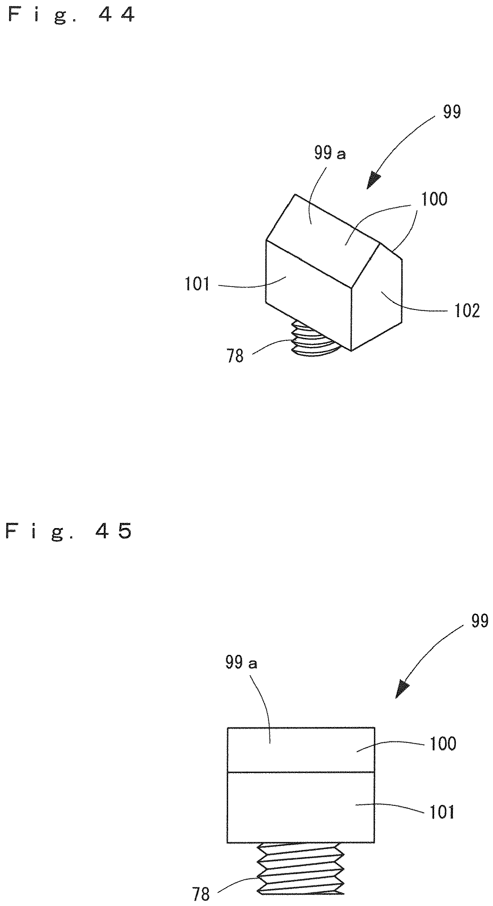

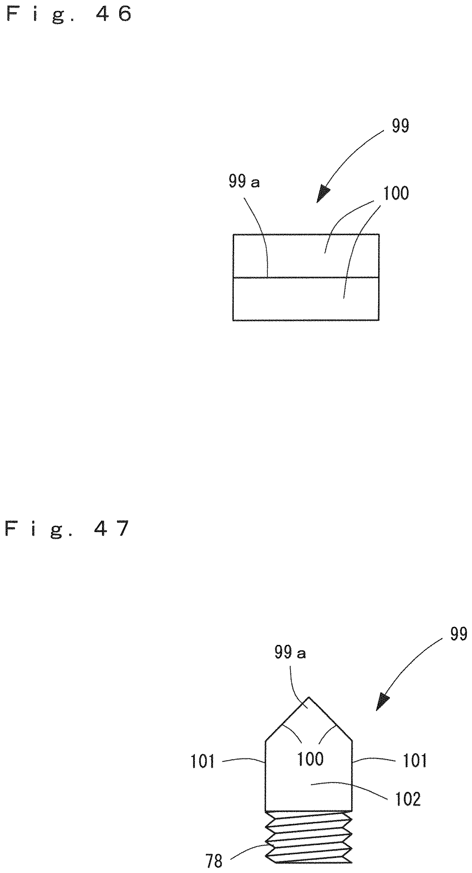

Figs. 13 through 50 show other embodiments of the present invention, in which like component parts of the first embodiment are denoted by like reference numerals. Of them, Figs. 13 through 17 show the second embodiment of the present invention, in which the seat belt cutting device 3 and glass crusher 4 are arranged on both ends of the square shank 8, and the first and second springs 15, 20 are received in the shank 8.

The structure and operation of this embodiment are substantially the same as the above-mentioned embodiment. The spring box 16 is connected to the square shank 8 through the guide pin 18, the spring box 16 is pushed into shank 8 so as to tighten the internal second spring 20. Also, the first spring 15 is tightened so that elasticity can be accumulated.

The guide pin 18 is inserted into the pin engaging groove 11 and pin switching groove 17 such that the guide pin 18 is normally positioned at the bent part, and then moved together with the movement of the spring box 16 so as to move on the switching edge 17a so that it can move the linear groove from the bent part.

At that time, the elastic resultant force of the first and second springs 15, 20 are acted on the guide pin 18 and then acted on the chip holder 21 so that the chip holder 21 is protruded and the impact chip 22 can be protruded from the opening 25.

In this embodiment, the lever 26 is formed in a generally L-shape, one end of which is rotatably connected to the square shank 8, and the basal end 26a of the lever 26 is arranged in such a manner as to be engageable with the end part of the spring box 16. Accordingly, the chip holder 21 is constituted simple in structure so that it can be manufactured reasonably at a low cost and mass production is achievable.

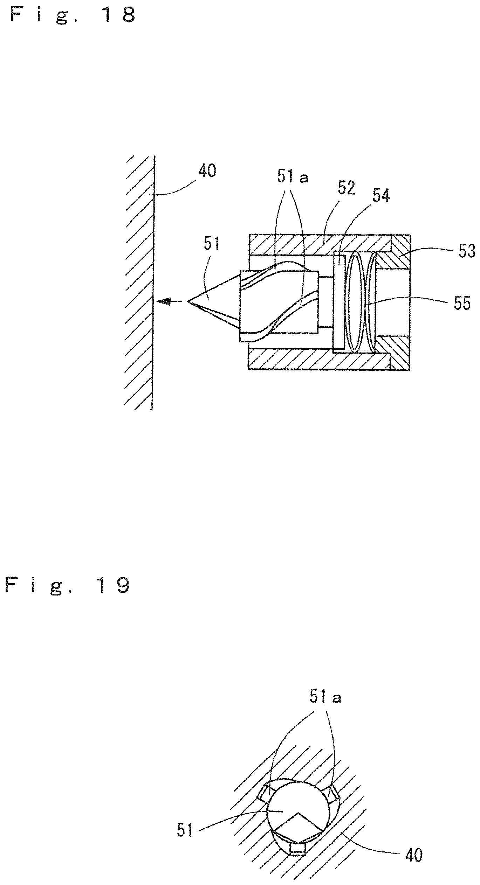

Figs. 18 through 20 show the third embodiment of the present invention. In this embodiment, as the crusher of the laminated glass 40, instead of causing the impact chip 22 to collide with the laminated glass 40, a high hardness crushing bit 51 is rotatably provided to the cylinder 52 as the crusher 22, so that the laminated glass 40 can be crushed or pierced.

The crushing bit 51 has a plurality of spiral blades 51a on the cylindrical surface to enhance the crushing power, the cylinder 52 is attached at one end thereof with a cap 53, a Belleville spring 55 is arranged between a flange 54 at a basal part of the crushing bit 51 and the cap 53 so that it can be expanded and contracted, and by expanding and contracting due to the elasticity of the Belleville spring 55, a swinging rotary motion is rendered to the crushing bit 51 when it is driven into the laminated glass 40, so that the outer surface of the laminated glass 40 can be crushed or pierced.

In this case, it is possible to link motors that can be driven by a vehicle power supplies to the crushing bit 51 in order to operate swinging rotary motion of the bit 51 for a long time.

It is also possible to arrange a gas cylinder (not shown) loaded with carbon dioxide of about 4 M Pa behind the flange 54, so that the carbon dioxide can be jetted to the spiral blade 51a by breaking a seal plate (not shown) in a predetermined period so as to increase the crushing capability.

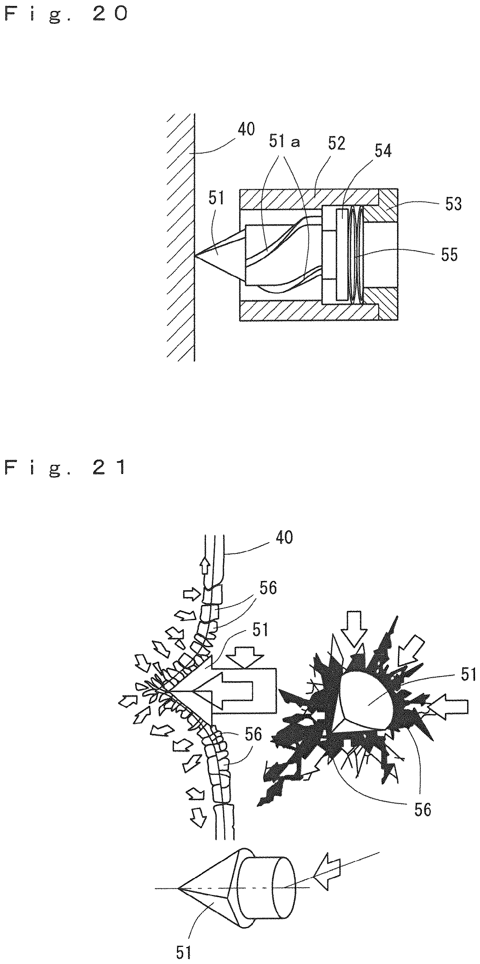

Fig. 21 shows the fourth embodiment of the present invention. According to this embodiment, the crushing bit 51, that is the impact tip 22, is formed in a pyramidal shape, so that glass particles and powder are dispersed and eliminated so as to carry out the crashing of the laminated glass 40 smoothly and efficiently.

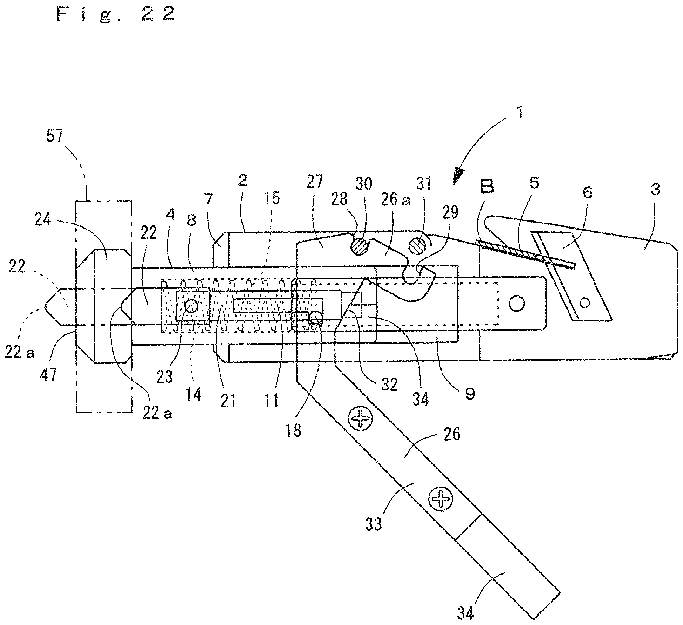

Fig. 22 shows the fifth embodiment of the present invention. According to this invention, a lighting cylinder 57 is attached to the outside of the grass pressing plate 24 in order to illuminate the area around the plate 24 to enable safe and reliable breaking operation at night.

The lightening cylinder 57 includes a plurality of LED lamps which can be blinked with built-in DC lamps (batteries) so that they can be turned on or off by switch (not shown).

The lightening cylinder 57 is substantially the same as the JP Patent No. 5757939 that is already proposed by the present applicant.

For other laminated glass clashing, in addition to the above-mentioned colliding method using an impacting tool or crashing using a rotating tool, it is possible to employ, for example, radiation of fluid such as high pressure air or high pressure water, ultrasonic irradiation, vibration breaking by vibration method due to repetitive elastic vibration, fusing method by irradiation with laser or maser beam or electromagnetic wave, a method of cutting a sharp can opener-shaped manual crusher by pushing it along the sash 36, 38, a method of crushing the laminated glass by continuously impacting therearound with a small power device such as an air hammer, or a method of continuously cutting around the laminated glass using a rotating power device such as a chainsaw.

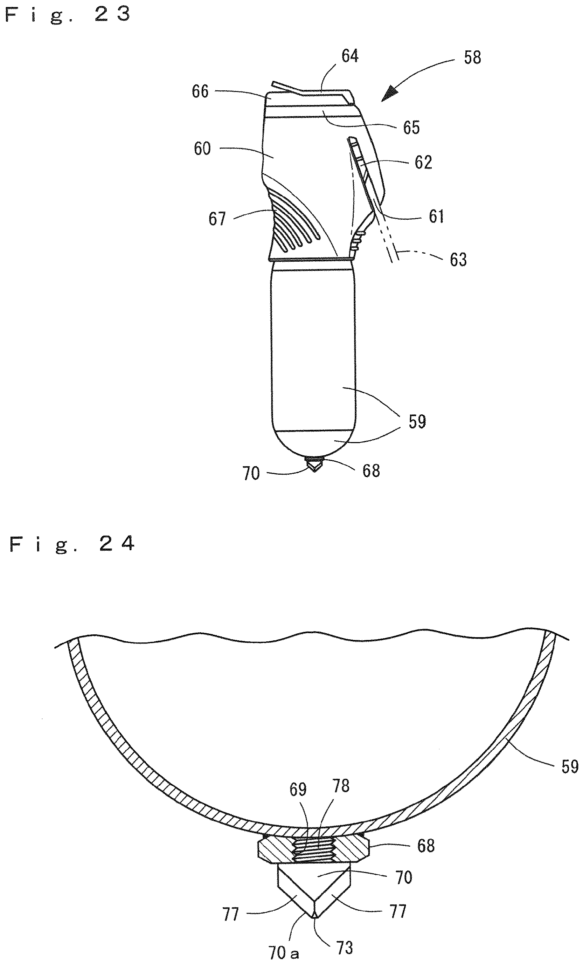

Figs. 23 through 29 show the sixth embodiment of the present invention. This embodiment shows a novel crushing device 58 suitable for crushing the laminated glass 40. The crushing device 58 is applied to fire extinguishing equipment installed in a vehicle. The fire extinguishing equipment is loaded with a small and lightweight carbon dioxide gas cylinder 59 (about 4 MPa) as a fire extinguishing gas, and a needle tube (not shown) that can break the seal plate (not shown) of the gas cylinder 59 is arranged within the crusher 60 loaded with the gas cylinder 59. The outline of the fire extinguisher is disclosed by the JP Patent No. 5148623 that is already proposed by the present applicant.

The crusher 60 is diagonally formed with the seat belt introducing groove 61 which is open downward such that the seat belt 63 inserted in the seat belt introducing groove 61 can be cut.

In Figs., 64 denotes a crush picking arranged at an upper end of the crusher 60. The crush picking 64 is pulled sideward to pull off a safety plate 65 connected to the picking 64, the breaking knob 66 is allowed to be pushed down through an empty space, and a diagonal tube (not shown) at a lower end of a diagonal tube (not shown) connected to a breaking knob 66 is pierced into the seal plate so that the seal plate can be broken.

As a result, the carbon dioxide gas filled in the cylinder can be injected. This carbon dioxide gas is injected from a nozzle (not shown) so as to be able to splay to the fire source. In the Figs., 67 denotes a grip of a concave curved surface on a lower part of the crusher 60.

A mounting nut 68 is welded to the bottom surface of the gas cylinder 59. and a glass crushing bit 70 is attached to a female screw 69 of the nut 68 as the impact chip 22.

The crushing bit 70 is formed in a generally iron shape by its alloy tool steel (SKD11) which has excellent wear resistance, and a leading end 70a is hardened so as to be highly hard.

In the leading end 70a, small roof-shaped bits 71 are placed back-to-back, the joint edge is divided by a deep ridge 72, and a short ridge 74 is derived from the top 73. Further, the ridge 75, 75 is branched in two directions from the lower end of the ridge 74, and the ridge 76, 76 is further branched in two directions from the lower end of the ridge 76, 76.

Then, a steep tapered surface 77 is formed between the ridges 72, 74, 75, 76 such that one side of the ridges 75, 76 is cut off vertically to form a vertical plane.

The leading edge 70a is formed at a lower part thereof with a threaded shaft 78 so that the threaded shaft can be tightened to a female thread 69.

Since the bit 70 has the tip 70a formed into a polyhedron by a plurality of tapered surfaces, when compared to the conventional conical or pyramidal tip, impact force is applied to the vehicle glass in various directions to promote crushing or drilling. Therefore, the laminated glass can be crushed efficiently and rapidly.

Therefore, the crushing device 58 with the bit 70 can crush the laminated glass 40 rapidly, so that the occupants will be able to rapidly escape from the passenger component.

Moreover, since the bit 70 can be mounted easily by screwing the threaded shaft 78 into the female screw 69, unlike the conventional method, an annular groove is formed on the peripheral surface of the mounting shaft, and a complicated operation of fitting a retaining ring into the groove is not required.

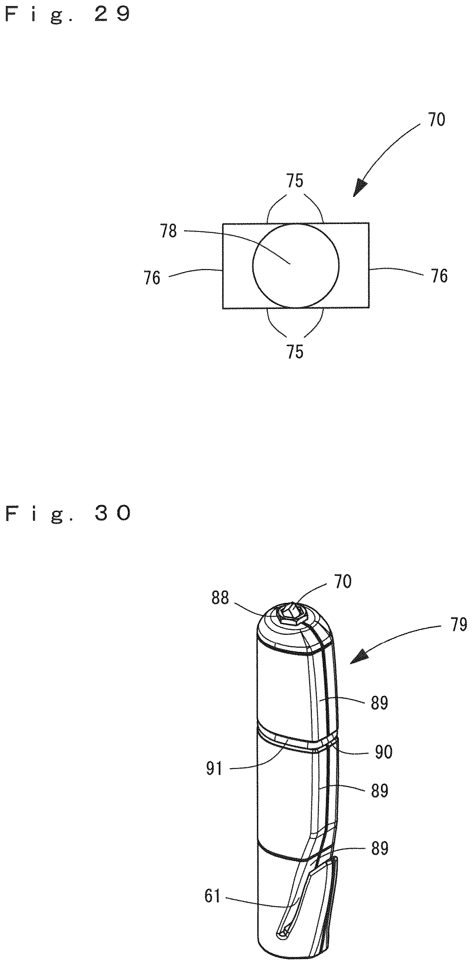

Figs. 30 through 32 show the seventh embodiment of the present invention. This embodiment shows a novel crushing device 79 suitable for crushing the laminated glass 40. This crushing device 79 is applied to an emergency escape device loaded on a vehicle. The escape device is received inside a door pocket (not shown) in a standing position. The outline of the emergency escape device is disclosed in JP Patent No. 6811122 already proposed by the present applicant.

The emergency escape device is formed in a generally cylindrical shape, one end of which is diagonally formed with a seat belt introducing groove 61 and has an opening. A seat belt cutter 62 is placed in the back of this groove 61 so that a seat belt (not shown) inserted into the groove 61 can be cut.

The other end of the emergency escape device is attached with the crushing bit 70 which becomes an essential part of the crushing device 79. The crushing bit 70 is attached to a female screw 82 formed on a bolt head 81, which is integral with a supporting rod 80 arranged within the cylindrical body of the emergency escape device, with a threaded shaft 78 tightened thereto.

In Figs., 83 denotes a cylindrical guide located on the outside of the supporting rod 80. Spacers 84, 85 are arranged at an upper end and lower end of the guide 83. A nut 86, which is screwed to a screw shaft of the supporting rod 80, is arranged on the spacer 84.

A spiral weight 97 having a coil spring shape is arranged at an inner side of the cylindrical guide 8, and its weight enhances the inertial force during use of the emergency escape device and enhances the impact force of the bit 70.

A hollow cylindrical bit holder 87 is arranged on the outside of a bolt head 81, and a cylindrical rubber protective cover 88 is arranged between the bit holder 87 and the bolt head 81. The leading edge of the protective cover 88 is protruded to the outside of the cylindrical body, and normally surrounds the bit 70 to avoid contact with fingers.

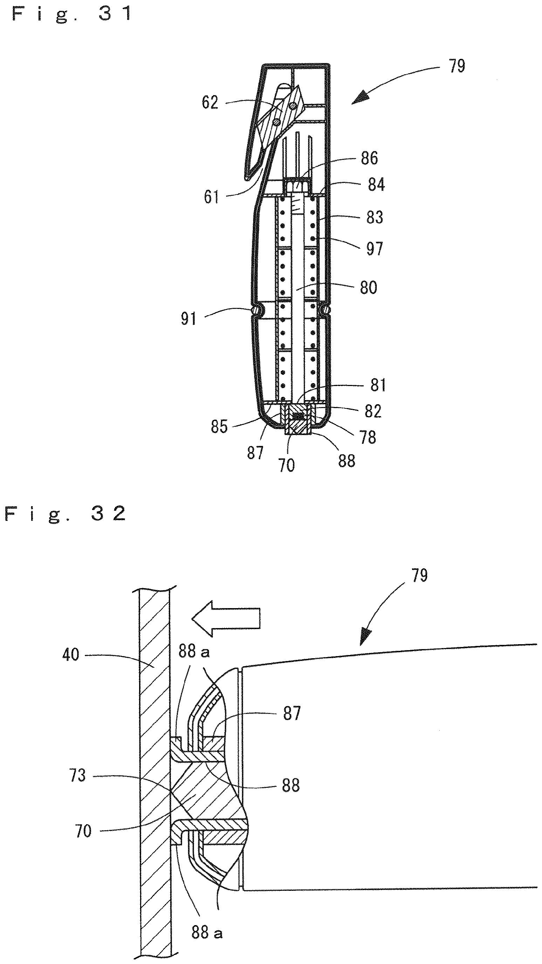

Also, when the laminated glass 40 is crushed by the crushing bit 70, a leading edge 88a of the protective cover 88 is pushed and bent to expose the tip of the bit 70 so that it can be abutted with the plate surface of the laminated glass 40, as shown in Fig. 32.

In Figs., 89 denotes a protrusion axially formed on the peripheral surface of the cylindrical body along the seat belt inserting groove 61, and 90 denotes a annular groove formed on an intermediate peripheral surface of the cylindrical body and attached to an O-ring 91, thus making it easier to hold the cylindrical body of the emergency escape device.

Since the crushing device 79 is provided at the leading end thereof with the crushing bit 70, impact force is applied to the vehicle glass in various directions to enhance breakage and piercing, and the laminated glass 40 can be crushed efficiently and rapidly when compared with the conventional crushing device having a conical or pyramidal leading end.

Therefore, the crushing device 79 having the crushing bit 70 can crush the laminated glass 40 rapidly so as to allow the escape from the cabin rapidly.

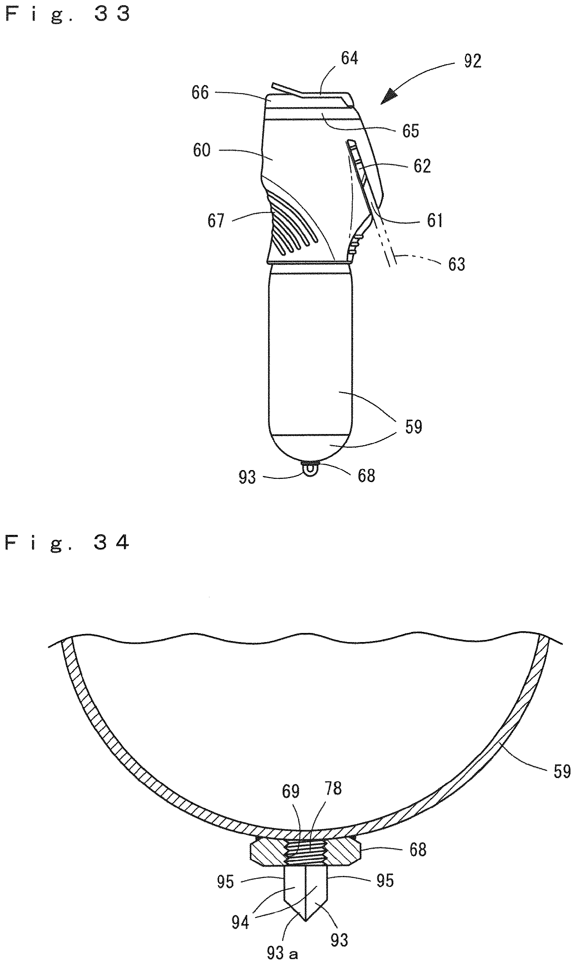

Figs. 33 through 39 show the eighth embodiment of the present invention. This embodiment shows a novel crushing device 92 suitable for crushing the laminated glass. The crushing device 92 is applied to a fire extinguisher loaded on a vehicle. Since the fire extinguisher is substantially the same as that of the eighth embodiment, like reference numerals are given to common components, and the description thereof is omitted.

In this embodiment, a mounting nut 68 is welded to a bottom surface of the gas cylinder 59, and a crushing bit 93, as the impact chip 22, is attached to the female screw 69 of the nut 68.

The crushing bit 93 is formed in a generally half Yagen by excellent alloy tool steel (SKD11) excellent in wear resistance.

In other words, the leading end 93a is slightly longer than the semi-circular front shape, both sides of its circumference are formed into an acute-angled tapered surface 94, and a flat surface 95 is formed on the outer side of the tapered surface 94 in order to obtain thin thickness and light weight.

The leading end 93a is formed at a lower part thereof with a threaded shaft 78, so that the shaft 78 can be screwed into the female screw 69 tightly.

In the crushing bit 93, since the both sides of the leading end 93a thereof is formed with an acute tapered surface, and a peripheral edge thereof is formed in a generally arcuate shape, when compared with the conventional conical or pyramidal leading end, a strong impact force can be acted on the vehicle glass over a wide area so as to enhance crushing and piercing, so that the laminated glass 40 can be crushed efficiently and rapidly.

Therefore, the crusher 92 equipped with the crushing bit 93 can crush the laminated class 40 and can make it possible for the passengers to escape from the cabin rapidly.

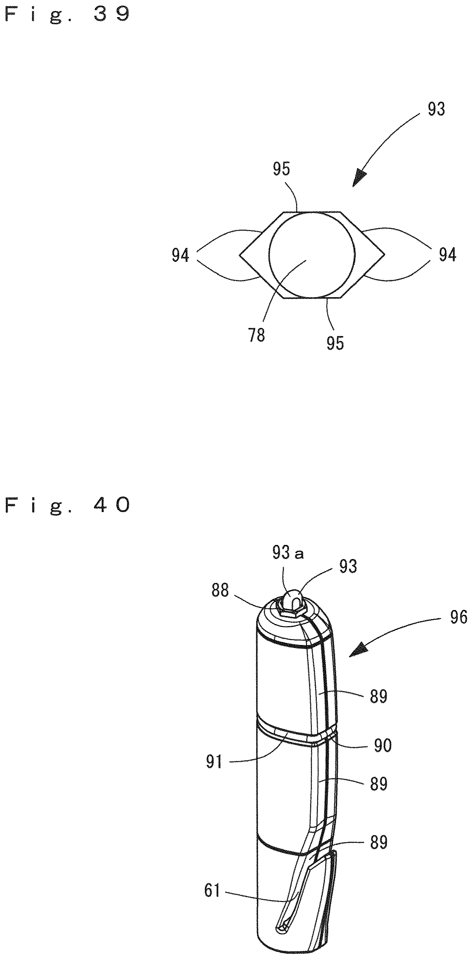

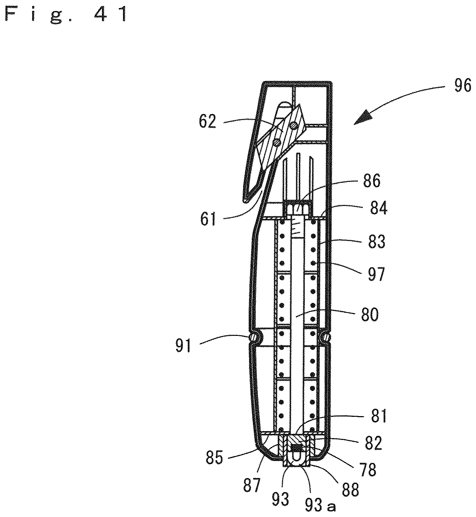

Figs. 40 and 41 show the eighth embodiment of the present invention. This embodiment shows a novel crushing device 96 suitable to crush the laminated glass 40.

The crushing device 96 applies to an emergency escape device loaded on a vehicle, and the escape device is received inside the door pocket (not shown) of the vehicle in a standing posture. Since the outline of the emergency escape device is generally the same as that of the eighth embodiment, like reference numerals are given to common components, and the description thereof is omitted.

The crushing bit 93 of this embodiment is the same as that of the eighth embodiment. Since the both sides of the leading end 93a thereof is formed with an acute tapered surface, and a peripheral edge thereof is formed in a generally arcuate shape, when compared with the conventional conical or pyramidal leading end, a strong impact force can be acted on the vehicle glass over a wide area so as to enhance crushing and piercing, so that the laminated glass 40 can be crushed efficiently and rapidly.

Therefore, the crusher 92 equipped with the crushing bit 93 can crush the laminated class 40 and can make it possible for the passengers to escape from the cabin rapidly.

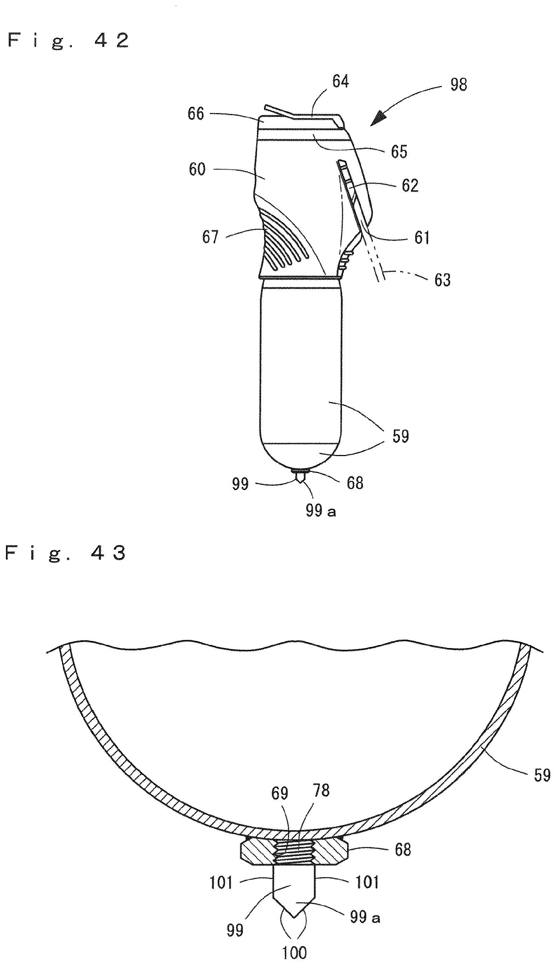

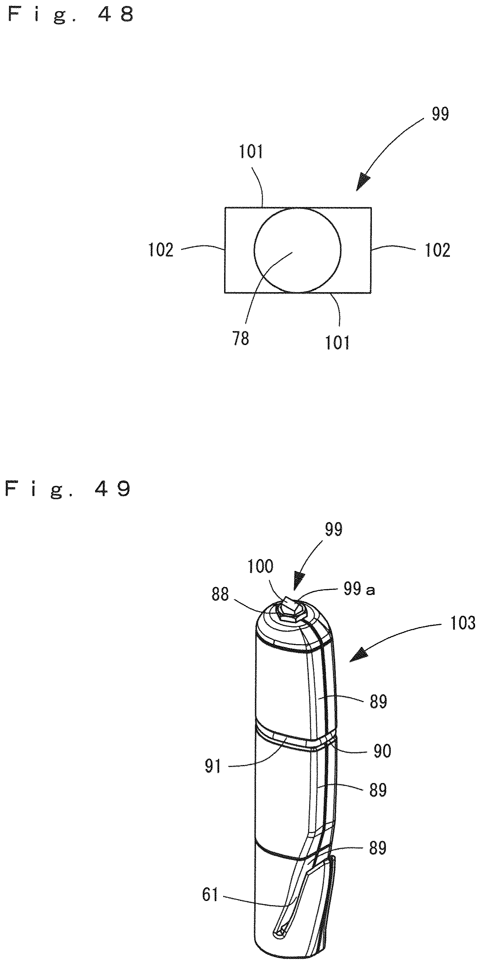

Figs. 42 and 48 show the tenth embodiment of the present invention. This embodiment shows a novel crushing device 98 suitable to crush the laminated glass 40. The crushing device 98 is applied to a fire extinguisher loaded on a vehicle. Since the fire extinguisher is substantially the same as that of the eighth embodiment, like reference numerals are given to common components, and the description thereof is omitted.

In this embodiment, a mounting nut 68 is welded to the bottom surface of the gas cylinder 59, and a male screw 78 of the crushing bit 99 is fastened to a female screw 69 of the nut 68 as the impact chip 22.

The crushing bit 99 is formed in a generally house shape by its alloy tool steel (SKD11) which has excellent wear resistance, and the leading end 70a is hardened so as to be highly hard.

A leading end 99a is formed by intersecting the tapered surfaces 100, 100 with the roof shape at the tip of the cross section of the generally house shape, and the vertical surface of the horizontally long rectangle and the vertical surface 101 of the house shape are arranged opposite to each other by cutting off all four sides vertically.

A threaded shaft 78 is formed at the lower part of the leading end 99a, so that the threaded shaft 78 can be tightened to the female screw 69.

In the crushing bit 99, the tip of the leading end 99a is formed on a plurality of tapered surfaces 99 with the acute angles and a vertical surface 102, and the periphery thereof is vertically cut off to form a horizontally long rectangular vertical surface 101 and a house-shaped vertical surface 102. Accordingly, when compared with the conventional conical or pyramidal leading end, a strong impact force acts strongly on the vehicle glass to promote crushing and piercing, so that the laminated glass can be crushed efficiently and rapidly.

Therefore, the crushing device 98 with the bit 99 can crush the laminated glass 40 rapidly, so that the occupants will be able to quickly escape from the passenger component.

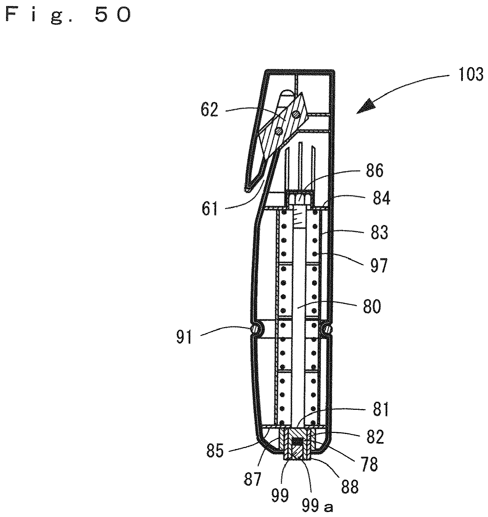

Fig. 49 and 50 show the eleventh embodiment of the present invention. This embodiment shows a crusher 103 suitable for crushing the laminated glass 40.

A crushing device 103 applies to an emergency escape device loaded on a vehicle, and the escape device is received inside the door pocket (not shown) of the vehicle in a standing posture. Since the emergency escape device of this embodiment is generally the same as that of the seventh embodiment, like reference numerals are given to common components, and the description thereof is omitted.

A crushing bit 99 of this embodiment is the same as that of the tenth embodiment. Since the both sides of the leading end 99a thereof is formed with an acute tapered surface 100, and the periphery thereof is vertically cut off to form a horizontally long rectangular vertical surface 101 and a house-shaped vertical surface 102. Accordingly, when compared with the conventional conical or pyramidal leading end, a strong impact force acts strongly on the vehicle glass to promote crushing and piercing, so that the laminated glass can be crushed efficiently and rapidly.

Therefore, the crushing device 103 with the bit 99 can crush the laminated glass 40 rapidly, so that the occupants will be able to quickly escape from the passenger component.

### INDUSTRIAL APPLICABILITY

As described hereinbefore, an emergency escape method for a vehicle and an emergency escape device therefor, are capable of escaping from the vehicle reliably and safely when, for example, the vehicle employing a laminated glass is submerged or when, for example, occupants of the vehicle are trapped within the vehicle because of a traffic accident, or the like by selecting various escape methods that can be taken in an emergency and realize a rational escape method.

### DESCRIPTION OF REFERENCE NUMERALS

- 3: seat belt cutting device
- 4: glass crusher
- 8: square shank
- 11: pin engaging groove
- 15: first spring
- 16: spring box
- 17: pin switching groove

- 17a: switching edge
- 18: guiding pin
- 20: second spring
- 21: chip holder
- 22: impact chip

- 24: glass pressing plate
- 25: opening
- 26: lever

- 28, 29: axis hole
- 30, 31: axis pin
- 40: laminated glass
- 47: protective sheet
- 48: escaping space
- 51, 93: crushing bit
- 51a: spiral blade
- 57: lighting cylinder

- 62: seat belt cutting device
- 58, 70, 72, 79, 96: crushing device
- 68: mounting nut
- 69: female thread
- 70: glass crusher
- 20a: leading end
- 77: tapered surface
- 78: threaded shaft

## Claims

1. An emergency escape method for a vehicle having a laminated glass as a vehicle glass comprising:
piercing the laminated glass at a predetermined area;
cutting or crashing thereof;
fusing or shaking thereof;
after performing one or more of those emergency operations, pushing outward the laminated glass by pressing the same at a position apart from the operating position, and
forming an escaping space between the pushing position and an attaching part of the laminated glass, so that occupants can escape through the escaping space.

2. The emergency escape method as claimed in claim 1, wherein the piercing of the laminated glass is performed by making an impact chip collide with the laminated glass vigorously at multiple places thereof.

3. The emergency escape method as claimed in claim 1, wherein the cutting is performed by causing a knife to bite into the laminated glass at multiple places thereof so as to be moved by man power or physical power, or a saw chain is rotated by physical power to move thereof.

4. The emergency escape method as claimed in claim 1, wherein the crushing is achieved by repeatedly striking the laminated glass at multiple places thereof with a blunt instrument.

5. The emergency escape method as claimed in claim 1, wherein the bushing is achieved by irradiating a laser or maser beam, or electromagnetic wave to the laminated glass at multiple places thereof.

6. The emergency escape method as claimed in claim 1, wherein the shaping is achieved by repeatedly applying pressurized fluid or elastic vibration, or irradiating ultrasonic waves to the laminated glass at a predetermined position thereof so that the laminated glass is repeatedly vibrated.

7. The emergency escape method as claimed in claim 1, wherein the emergency operating positions of the laminated glass can be selected depending on the physique of the occupants of the vehicle, the riding position, and the cabin conditions.

8. The emergency escape method as claimed in claim 1, wherein the emergency operating positions of the laminated glass are arranged as closely as possible, and the operation interval is removed with a tool or knife.

9. The emergency escape method as claimed in claim 2, wherein after installing the impact tip away from the laminated glass, the tip is moved vigorously and collided therewith.

10. The emergency escape method as claimed in claim 2, wherein the laminated glass is arranged at a front seat door side where partial restriction therearound can be released.

11. An emergency escape device for a vehicle having a laminated glass as a vehicle glass comprising:
a seat belt cutting device;
a component part capable of piercing, cutting or crushing and fusing or shaping the laminated glass at a predetermined area; and
after performing one or more of those emergency operations, the laminated glass is pushed outward by pressing the same at a position apart from the operating position, and
an escaping space formed between the operating position and an attaching part of the laminated glass, so that occupants can escape through the escaping space.

12. The emergency escape device as claimed in claim 11, wherein the emergency escape device is provided at the other end with a glass crusher, and the glass crusher is provided with an impact chip which is collided with the laminated glass vigorously at multiple places thereof such that the laminated glass can be pierced.

13. The emergency escape device as claimed in claim 11, wherein a knife is caused to bite into the laminated glass at multiple places and moved by man power or physical power or a saw chain is rotated and moved by physical power, so that the laminated glass can be cut.

14. The emergency escape device as claimed in claim 11, wherein the laminated glass can be struck repeatedly at multiple places thereof by a blunt instrument.

15. The emergency escape device as claimed in claim 11, wherein the laminated glass is irradiated at multiple places thereof with a laser or maser beam, or electromagnetic wave to achieve the fusing.

16. The emergency escape device as claimed in claim 11, wherein a pressurized fluid or elastic vibration can be applied to a predetermined area of the laminated glass repeatedly, or an ultrasonic wave is applied thereto so that the laminated glass is vibrated repeatedly so as to be shaped.

17. The emergency escape device as claimed in claim 12, which further comprises an impact chip capable of colliding with the laminated glass, the impact chip being moved at a high speed by elasticity of a spring.

18. The emergency escape device as claimed in claim 17, wherein a square shank receiving therein a chip holder which is provided with a first spring and an impact tip, and a spring box receiving therein a second spring are slidably received inside the emergency escape device.

19. The emergency escape device as claimed in claim 18, wherein the chip holder and spring box can move proximate to each other.

20. The emergency escape device as claimed in claim 18, wherein elasticity of the first and second springs can be accumulated when the chip holder and spring holder move proximate to each other.

21. The emergency escape device as claimed in claim 18, wherein the square shank is formed with a pin engaging groove having a generally L-shape, the spring box is formed with a pin switching groove having a generally parallelogram shape, these grooves are arranged so as to be partially overlapped, the guide pin is inserted into the overlapped part, and the guide pin is normally be arranged for engagement at a bent part of the pin engaging groove.

22. The emergency escape device as claimed in claim 21, wherein when the square shank and spring box move proximate to each other, the guide pin can move together therewith, and during constant movement of the square shank and spring box, the guide pin can move to the bent part of the pin engaging groove, so that the guide pin can move from the bent part of the pin engaging groove.

23. The emergency escape device as claimed in claim 21, wherein when the guide pin moves from the bent part of the pin engaging groove, the chip holder can be moved to a leading end of the square shank due to the accumulated elasticity of the first and second springs, so that the leading end of the chip holder can be projected from a leading end of the square shank.

24. The emergency escape device as claimed in claim 18, wherein a grass pressing plate at the leading end of the square shank is provided with an opening such that the opening can be closed normally through a protective sheet made of rubber.

25. The emergency escape device as claimed in claim 18, wherein the square shank is provided at a rear end facing position thereof with an engaging projection, and a lever is engagably and rotatably arranged on the engaging projection, such that the square shank and spring box can move proximate to each other through the rotating operation of the lever.

26. The emergency escape device as claimed in claim 25, wherein the lever is spacedly formed at one end thereof with a pair of axis holes, such that the axis holes can be engaged gradually with two axis pins arranged at an intermediate part of the escape device body, and distances between the axis pins and the engaging projection are different from each other, so that the turning radius of the lever can be increased gradually.

27. The emergency escape device as claimed in claim 18, wherein after projection of the impact chip, the lever is released from retention, the lever is then moved to an original position through elasticity of the first and second springs, and the impact tip can be returned to its original position, so that those can be reset.

28. The emergency escape device as claimed in claim 24, wherein the glass pressing plate is provided therearound with a lighting cylinder.

29. The emergency escape device as claimed in claim 12, wherein the glass crusher is provided with a crushing bit which can be rotated by fluid power or motive power, the crushing bit is provided with a plurality of spiral blades, or the crushing bit is formed in a pyramidal shape, so that the laminated glass can be pierced or crushed.

30. The emergency escape device as claimed in claim 12, wherein the glass crusher is provided at a leading end thereof with a plurality of tapered surfaces, with a threaded shaft at a basal part of the leading end, and the threaded shaft can be tightened to a female screw which is provided to an end of the emergency escape device.

31. The emergency escape device as claimed in claim 30, wherein the leading end of the crushing bit can be collided with or strike the laminated glass, so that the laminated glass can be pierced, crushed or broken.

32. The emergency escape device as claimed in claim 30, wherein the crushing bit is attached to one end of a fire extinguisher mounted on the vehicle, the fire extinguisher can be held with one hand and loaded with a dioxide gas cylinder, and a threaded shaft can be tightened to a female thread of a nut attached to a bottom of the gas cylinder.

33. The emergency escape device as claimed in claim 30, wherein the crushing bit is attached to one end of the cylindrical emergency escape device which is mounted on the vehicle and can be held with one hand, and the threaded shaft can be tightened to the female screw provided at one end of the emergency escape device.
